# EUROPEAN PATENT APPLICATION

(11) **EP 4 586 534 A1**
(43) Date of publication of application: **16.07.2025**
(21) Application number: 23870424.1
(22) Date of filing: 18.09.2023
(51) Int. Cl.: H04L 5/00, H04W 72/04

(54) **REFERENCE SIGNAL PORT INDICATION METHOD AND APPARATUS**

(30) Priority: 30.09.2022 CN 202211209100
(71) Applicant: Huawei Technologies Co., Ltd., Shenzhen, Guangdong 518129 (CN)
(72) Inventor: GAO, Junhui, Shenzhen, Guangdong 518129 (CN); XU, Jun, Shenzhen, Guangdong 518129 (CN); JIN, Huangping, Shenzhen, Guangdong 518129 (CN)
(74) Representative: Körber, Martin Hans
(86) International application number: PCT/CN2023/119305
(87) International publication number: WO 2024/067190

(57) **Abstract**

Embodiments of this application relate to a reference signal port indication method and an apparatus, to effectively indicate more ports. The method includes: A network device determines first information and second information. The network device sends the first information and the second information to a terminal device, where the first information indicates reference signal port indexes corresponding to m code division multiplexing groups, m is an integer greater than or equal to 2, at least two of the m code division multiplexing groups support different quantities of orthogonal ports, the second information indicates a first reference signal port index in a reference signal port correspondence indicated by the reference signal port indexes corresponding to the m code division multiplexing groups, and the first reference signal port index indicates a port used for a reference signal.

## Description

### CROSS-REFERENCE TO RELATED APPLICATIONS

This application claims priority to Chinese Patent Application No. 202211209100.6, filed with the China National Intellectual Property Administration on September 30, 2022 and entitled "REFERENCE SIGNAL PORT INDICATION METHOD AND APPARATUS", which is incorporated herein by reference in its entirety.

### TECHNICAL FIELD

This application relates to the field of communication technologies, and in particular, to a reference signal port indication method and an apparatus.

### BACKGROUND

A 5th generation (5th generation, 5G) system or new radio (new radio, NR) has higher requirements on a system capacity, spectral efficiency, and the like. A massive multiple input multiple output (multiple input multiple output, MIMO) technology plays an important role in the spectral efficiency of the system. To use a spatial degree of freedom brought by the MIMO technology, a receiver with good performance needs to be designed in both uplink transmission and downlink transmission for data demodulation. Performance of the receiver depends on accuracy of equivalent channel estimation to a large extent. An equivalent channel may be understood as a product of a channel matrix and a precoding matrix.

To improve uplink and downlink transmission performance, a demodulation reference signal (demodulation reference signal, DMRS) may be used for uplink and downlink equivalent channel estimation, to demodulate data. The DMRS and the data are sent together, and precoding is performed by using a same precoding matrix as the data. In a MIMO system, one DMRS port is allocated to data at each transport layer, and an equivalent channel of the data at the layer is estimated by using a DMRS sent through the DMRS port.

With massive growth of 5G devices and development of high-data-rate services, support for sending data at a larger quantity of transport layers is becoming a mainstream direction of MIMO evolution. In addition, an advanced signal processing technology that is continuously developed also enables transmission of data at a larger quantity of layers. Therefore, more orthogonal DMRS ports are needed, and how to effectively indicate a DMRS port used for a reference signal is a technical problem that needs to be resolved.

### SUMMARY

Embodiments of this application provide a reference signal port indication method and an apparatus, to effectively indicate more ports.

According to a first aspect, a reference signal indication method is provided, including the following process: A network device generates first information and second information. The network device sends the first information and the second information to a terminal device. The first information indicates reference signal port indexes corresponding to m code division multiplexing groups, m is an integer greater than or equal to 2, at least two of the m code division multiplexing groups support different quantities of orthogonal ports, the second information indicates a first reference signal port index in a reference signal port correspondence indicated by the reference signal port indexes corresponding to the m code division multiplexing groups, and the first reference signal port index indicates a port used for a reference signal.

In the method, the at least two of the m code division multiplexing groups support the different quantities of orthogonal ports, and the network device sends the first information and the second information to the terminal device, to indicate the first reference signal port index in the reference signal port correspondence indicated by the reference signal port indexes corresponding to the m code division multiplexing groups, so as to indicate more ports.

According to a second aspect, a reference signal indication method is provided, including the following process: A terminal device receives first information and second information from a network device, where the first information indicates reference signal port indexes corresponding to m code division multiplexing groups, m is a positive integer greater than or equal to 2, at least two of the m code division multiplexing groups support different quantities of orthogonal ports, and the second information indicates a first reference signal port index in a reference signal port correspondence indicated by the reference signal port indexes corresponding to the m code division multiplexing groups. The terminal device determines, based on the first reference signal port index, a port used for a reference signal.

In an example of the first aspect and the second aspect, the first information is related to a port type and/or a quantity of port symbols of the reference signal. Optionally, the port type includes the first information, for example, includes one or more of a first type, first-type non-uniform expansion, first-type uniform expansion, a second type, second-type non-uniform expansion, or second-type uniform expansion.

In an example of the first aspect and the second aspect, the different quantities of orthogonal ports supported by the at least two of the m code division multiplexing groups may be obtained by performing non-uniform expansion on the at least two of the m code division multiplexing groups. In other words, expansion multiples of ports of the at least two code division multiplexing groups are different.

In a possible implementation of the first aspect and the second aspect, the second information is determined based on a delay spread of a channel between the terminal device and the network device. For example, if the delay spread of the channel between the terminal device and the network device is large, the network device may indicate, to the terminal device, port indexes corresponding to a CDM group (for example, a CDM group with a smallest expansion multiple) with a smallest quantity of a maximum of supported orthogonal ports in the m CDM groups. If the delay spread of the channel between the terminal device and the network device is small, the network device may indicate, to the terminal device, port indexes corresponding to a CDM group (for example, a CDM group with a largest expansion multiple) with a largest quantity of a maximum of supported orthogonal ports in the m CMD groups. A size of the delay spread of the channel between the terminal device and the network device may be determined based on all terminal devices scheduled by the network device. For example, the network device determines several delay spread ranges based on all the scheduled terminal devices. A delay spread within a first delay spread range is large, and a delay spread within a second delay spread range is small. Optionally, the several delay spread ranges may be obtained through division based on one or more thresholds.

In a possible implementation of the first aspect and the second aspect, when the port type of the reference signal is the first type and the quantity of port symbols of the reference signal is 1, in the m code division multiplexing groups, a maximum quantity of orthogonal ports supported by a code division multiplexing group 0 is 6, and a maximum quantity of orthogonal ports supported by a code division multiplexing group 1 is 2. Optionally, the code division multiplexing group 0 is obtained by performing three-fold expansion, and the code division multiplexing group 1 is obtained by performing one-fold expansion. In this expansion result, a port in the code division multiplexing group 0 is allocated to a terminal device with a small delay spread for use, and a port in the code division multiplexing group 1 is allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

In a possible implementation of the first aspect and the second aspect, the reference signal port correspondence may include one or more of the following correspondences: when an index is a first value, a reference signal port index corresponding to the index is 0; when the index is a second value, the reference signal port index corresponding to the index is 1; when the index is a third value, the reference signal port index corresponding to the index is 2; when the index is a fourth value, the reference signal port index corresponding to the index is 3; when the index is a fifth value, the reference signal port index corresponding to the index is 8; when the index is a sixth value, the reference signal port index corresponding to the index is 9; when the index is a seventh value, the reference signal port index corresponding to the index is 10; when the index is an eighth value, the reference signal port index corresponding to the index is 11; when the index is a ninth value, the reference signal port index corresponding to the index is one or more of the following: 0 or 1; when the index is a tenth value, the reference signal port index corresponding to the index is one or more of the following: 2 or 3; when the index is an eleventh value, the reference signal port index corresponding to the index is one or more of the following: 8 or 9; when the index is a twelfth value, the reference signal port index corresponding to the index is one or more of the following: 10 or 11; when the index is a thirteenth value, the reference signal port index corresponding to the index is one or more of the following: 0, 1, or 8; when the index is a fourteenth value, the reference signal port index corresponding to the index is one or more of the following: 9, 10, or 11; or when the index is a fifteenth value, the reference signal port index corresponding to the index is one or more of the following: 0, 1, 8, or 9.

In a possible implementation of the first aspect and the second aspect, when the port type of the reference signal is the second type and the quantity of port symbols of the reference signal is 1, in the m code division multiplexing groups, a maximum quantity of orthogonal ports supported by a code division multiplexing group 0 is 6, a maximum quantity of orthogonal ports supported by a code division multiplexing group 1 is 4, and a maximum quantity of orthogonal ports supported by a code division multiplexing group 2 is 2. Optionally, the code division multiplexing group 0 is obtained by performing three-fold expansion, the code division multiplexing group 1 is obtained by performing two-fold expansion, and the code division multiplexing group 2 is obtained by performing one-fold expansion. In this expansion result, a port in the code division multiplexing group 0 or the code division multiplexing group 1 is allocated to a terminal device with a small delay spread for use, and a port in the code division multiplexing group 2 is allocated to a terminal device with a large delay spread for use, so that the terminal device with the large delay spread does not overlap another terminal device In delay domain. Therefore, orthogonality between ports can be ensured, and channel estimation accuracy and demodulation performance can be improved.

In a possible implementation of the first aspect and the second aspect, the reference signal port correspondence may include one or more of the following correspondences: when an index is a first value, a reference signal port index corresponding to the index is 0; when the index is a second value, the reference signal port index corresponding to the index is 1; when the index is a third value, the reference signal port index corresponding to the index is 2; when the index is a fourth value, the reference signal port index corresponding to the index is 3; when the index is a fifth value, the reference signal port index corresponding to the index is 4; when the index is a sixth value, the reference signal port index corresponding to the index is 5; when the index is a seventh value, the reference signal port index corresponding to the index is 12; when the index is an eighth value, the reference signal port index corresponding to the index is 13; when the index is a ninth value, the reference signal port index corresponding to the index is 14; when the index is a tenth value, the reference signal port index corresponding to the index is 15; when the index is an eleventh value, the reference signal port index corresponding to the index is 16; when the index is a twelfth value, the reference signal port index corresponding to the index is 17; when the index is a thirteenth value, the reference signal port index corresponding to the index is 0 or 1; when the index is a fourteenth value, the reference signal port index corresponding to the index is 2 or 3; when the index is a fifteenth value, the reference signal port index corresponding to the index is 4 or 5; when the index is a sixteenth value, the reference signal port index corresponding to the index is 12 or 13; when the index is a seventeenth value, the reference signal port index corresponding to the index is 14 or 15; when the index is an eighteenth value, the reference signal port index corresponding to the index is 16 or 17; when the index is a nineteenth value, the reference signal port index corresponding to the index is one or more of the following: 0, 1, or 12; when the index is a twentieth value, the reference signal port index corresponding to the index is one or more of the following: 13, 16, or 17; when the index is a twenty-first value, the reference signal port index corresponding to the index is one or more of the following: 2, 3, or 14; when the index is a twenty-second value, the reference signal port index corresponding to the index is one or more of the following: 0, 1, 12, or 13; or when the index is a twenty-third value, the reference signal port index corresponding to the index is one or more of the following: 2, 3, 14, or 15.

In a possible implementation of the first aspect and the second aspect, when the port type of the reference signal is the second type and the quantity of port symbols of the reference signal is 1, in the m code division multiplexing groups, a maximum quantity of orthogonal ports supported by a code division multiplexing group 0 is 8, a maximum quantity of orthogonal ports supported by a code division multiplexing group 1 is 2, and a maximum quantity of orthogonal ports supported by a code division multiplexing group 2 is 2. Optionally, the code division multiplexing group 0 is obtained by performing four-fold expansion, the code division multiplexing group 1 is obtained by performing one-fold expansion, and the code division multiplexing group 2 is obtained by performing one-fold expansion. In this expansion result, a port in the code division multiplexing group 0 is allocated to a terminal device with a small delay spread for use, and a port in the code division multiplexing group 1 or the code division multiplexing group 2 is allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

In a possible implementation of the first aspect and the second aspect, when the port type of the reference signal is the first type and the quantity of port symbols of the reference signal is 2, in the m code division multiplexing groups, a maximum quantity of orthogonal ports supported by a code division multiplexing group 0 is 12, and a maximum quantity of orthogonal ports supported by a code division multiplexing group 1 is 4. For a capacity expansion manner of the first type and the quantity of port symbols being 2, refer to the capacity expansion manner of the first type and the quantity of port symbols being 1. Details are not described herein again.

In a possible implementation of the first aspect and the second aspect, the reference signal port correspondence may include one or more of the following correspondences: when an index is a first value, a reference signal port index corresponding to the index is 0, and a quantity of port symbols corresponding to the reference signal port index is 1; when the index is a second value, the reference signal port index corresponding to the index is 1, and the quantity of port symbols corresponding to the reference signal port index is 1; when the index is a third value, the reference signal port index corresponding to the index is 2, and the quantity of port symbols corresponding to the reference signal port index is 1; when the index is a fourth value, the reference signal port index corresponding to the index is 3, and the quantity of port symbols corresponding to the reference signal port index is 1; when the index is a fifth value, the reference signal port index corresponding to the index is 8, and the quantity of port symbols corresponding to the reference signal port index is 1; when the index is a sixth value, the reference signal port index corresponding to the index is 9, and the quantity of port symbols corresponding to the reference signal port index is 1; when the index is a seventh value, the reference signal port index corresponding to the index is 10, and the quantity of port symbols corresponding to the reference signal port index is 1; when the index is an eighth value, the reference signal port index corresponding to the index is 11, and the quantity of port symbols corresponding to the reference signal port index is 1; when the index is a ninth value, the reference signal port index corresponding to the index is one or more of the following: 0 or 1, and the quantity of port symbols corresponding to the reference signal port index is 1; when the index is a tenth value, the reference signal port index corresponding to the index is one or more of the following: 2 or 3, and the quantity of port symbols corresponding to the reference signal port index is 1; when the index is an eleventh value, the reference signal port index corresponding to the index is one or more of the following: 8 or 9, and the quantity of port symbols corresponding to the reference signal port index is 1; when the index is a twelfth value, the reference signal port index corresponding to the index is one or more of the following: 10 or 11, and the quantity of port symbols corresponding to the reference signal port index is 1; when the index is a thirteenth value, the reference signal port index corresponding to the index is one or more of the following: 0, 1, or 8, and the quantity of port symbols corresponding to the reference signal port index is 1; when the index is a fourteenth value, the reference signal port index corresponding to the index is one or more of the following: 9, 10, or 11, and the quantity of port symbols corresponding to the reference signal port index is 1; when the index is a fifteenth value, the reference signal port index corresponding to the index is one or more of the following: 0, 1, 8, or 9, and the quantity of port symbols corresponding to the reference signal port index is 1; when the index is a sixteenth value, the reference signal port index corresponding to the index is 0, and the quantity of port symbols corresponding to the reference signal port index is 2; when the index is a seventeenth value, the reference signal port index corresponding to the index is 1, and the quantity of port symbols corresponding to the reference signal port index is 2; when the index is an eighteenth value, the reference signal port index corresponding to the index is 2, and the quantity of port symbols corresponding to the reference signal port index is 2; when the index is a nineteenth value, the reference signal port index corresponding to the index is 3, and the quantity of port symbols corresponding to the reference signal port index is 2; when the index is a twentieth value, the reference signal port index corresponding to the index is 4, and the quantity of port symbols corresponding to the reference signal port index is 2; when the index is a twenty-first value, the reference signal port index corresponding to the index is 5, and the quantity of port symbols corresponding to the reference signal port index is 2; when the index is a twenty-second value, the reference signal port index corresponding to the index is 6, and the quantity of port symbols corresponding to the reference signal port index is 2; when the index is a twenty-third value, the reference signal port index corresponding to the index is 7, and the quantity of port symbols corresponding to the reference signal port index is 2; when the index is a twenty-fourth value, the reference signal port index corresponding to the index is 8, and the quantity of port symbols corresponding to the reference signal port index is 2; when the index is a twenty-fifth value, the reference signal port index corresponding to the index is 9, and the quantity of port symbols corresponding to the reference signal port index is 2; when the index is a twenty-sixth value, the reference signal port index corresponding to the index is 10, and the quantity of port symbols corresponding to the reference signal port index is 2; when the index is a twenty-seventh value, the reference signal port index corresponding to the index is 11, and the quantity of port symbols corresponding to the reference signal port index is 2; when the index is a twenty-eighth value, the reference signal port index corresponding to the index is 12, and the quantity of port symbols corresponding to the reference signal port index is 2; when the index is a twenty-ninth value, the reference signal port index corresponding to the index is 13, and the quantity of port symbols corresponding to the reference signal port index is 2; when the index is a thirtieth value, the reference signal port index corresponding to the index is 14, and the quantity of port symbols corresponding to the reference signal port index is 2; when the index is a thirty-first value, the reference signal port index corresponding to the index is 15, and the quantity of port symbols corresponding to the reference signal port index is 2; when the index is a thirty-second value, the reference signal port index corresponding to the index is 0 or 1, and the quantity of port symbols corresponding to the reference signal port index is 2; when the index is a thirty-third value, the reference signal port index corresponding to the index is 2 or 3, and the quantity of port symbols corresponding to the reference signal port index is 2; when the index is a thirty-fourth value, the reference signal port index corresponding to the index is 4 or 5, and the quantity of port symbols corresponding to the reference signal port index is 2; when the index is a thirty-fifth value, the reference signal port index corresponding to the index is 6 or 7, and the quantity of port symbols corresponding to the reference signal port index is 2; when the index is a thirty-sixth value, the reference signal port index corresponding to the index is 8 or 9, and the quantity of port symbols corresponding to the reference signal port index is 2; when the index is a thirty-seventh value, the reference signal port index corresponding to the index is 10 or 11, and the quantity of port symbols corresponding to the reference signal port index is 2; when the index is a thirty-eighth value, the reference signal port index corresponding to the index is 12 or 13, and the quantity of port symbols corresponding to the reference signal port index is 2; when the index is a thirty-ninth value, the reference signal port index corresponding to the index is 14 or 15, and the quantity of port symbols corresponding to the reference signal port index is 2; when the index is a fortieth value, the reference signal port index corresponding to the index is one or more of the following: 0, 1, or 4, and the quantity of port symbols corresponding to the reference signal port index is 2; when the index is a forty-first value, the reference signal port index corresponding to the index is one or more of the following: 5, 8, or 9, and the quantity of port symbols corresponding to the reference signal port index is 2; when the index is a forty-second value, the reference signal port index corresponding to the index is one or more of the following: 10, 11, or 12, and the quantity of port symbols corresponding to the reference signal port index is 2; when the index is a forty-third value, the reference signal port index corresponding to the index is one or more of the following: 13, 14, or 15, and the quantity of port symbols corresponding to the reference signal port index is 2; when the index is a forty-fourth value, the reference signal port index corresponding to the index is one or more of the following: 2, 3, or 6, and the quantity of port symbols corresponding to the reference signal port index is 2; when the index is a forty-fifth value, the reference signal port index corresponding to the index is one or more of the following: 0, 1, 4, or 5, and the quantity of port symbols corresponding to the reference signal port index is 2; when the index is a forty-sixth value, the reference signal port index corresponding to the index is one or more of the following: 8, 9, 10, or 11, and the quantity of port symbols corresponding to the reference signal port index is 2; when the index is a forty-seventh value, the reference signal port index corresponding to the index is one or more of the following: 12, 13, 14, or 15, and the quantity of port symbols corresponding to the reference signal port index is 2; or when the index is a forty-eighth value, the reference signal port index corresponding to the index is one or more of the following: 2, 3, 6, or 7, and the quantity of port symbols corresponding to the reference signal port index is 2.

In a possible implementation of the first aspect and the second aspect, when the port type of the reference signal is the second type and the quantity of port symbols of the reference signal is 2, in the m code division multiplexing groups, a maximum quantity of orthogonal ports supported by a code division multiplexing group 0 is 12, a maximum quantity of orthogonal ports supported by a code division multiplexing group 1 is 8, and a maximum quantity of orthogonal ports supported by a code division multiplexing group 2 is 4. For a capacity expansion manner of the second type and the quantity of port symbols being 2, refer to the capacity expansion manner of the second type and the quantity of port symbols being 1. Details are not described herein again.

In a possible implementation of the first aspect and the second aspect, the reference signal port correspondence may include one or more of the following correspondences: when an index is a first value, a reference signal port index corresponding to the index is 0, and a quantity of port symbols corresponding to the reference signal port index is 1; when the index is a second value, the reference signal port index corresponding to the index is 1, and the quantity of port symbols corresponding to the reference signal port index is 1; when the index is a third value, the reference signal port index corresponding to the index is 2, and the quantity of port symbols corresponding to the reference signal port index is 1; when the index is a fourth value, the reference signal port index corresponding to the index is 3, and the quantity of port symbols corresponding to the reference signal port index is 1; when the index is a fifth value, the reference signal port index corresponding to the index is 4, and the quantity of port symbols corresponding to the reference signal port index is 1; when the index is a sixth value, the reference signal port index corresponding to the index is 5, and the quantity of port symbols corresponding to the reference signal port index is 1; when the index is a seventh value, the reference signal port index corresponding to the index is 12, and the quantity of port symbols corresponding to the reference signal port index is 1; when the index is an eighth value, the reference signal port index corresponding to the index is 13, and the quantity of port symbols corresponding to the reference signal port index is 1; when the index is a ninth value, the reference signal port index corresponding to the index is 14, and the quantity of port symbols corresponding to the reference signal port index is 1; when the index is a tenth value, the reference signal port index corresponding to the index is 15, and the quantity of port symbols corresponding to the reference signal port index is 1; when the index is an eleventh value, the reference signal port index corresponding to the index is 16, and the quantity of port symbols corresponding to the reference signal port index is 1; when the index is a twelfth value, the reference signal port index corresponding to the index is 17, and the quantity of port symbols corresponding to the reference signal port index is 1; when the index is a thirteenth value, the reference signal port index corresponding to the index is 0 or 1, and the quantity of port symbols corresponding to the reference signal port index is 1; when the index is a fourteenth value, the reference signal port index corresponding to the index is 2 or 3, and the quantity of port symbols corresponding to the reference signal port index is 1; when the index is a fifteenth value, the reference signal port index corresponding to the index is 4 or 5, and the quantity of port symbols corresponding to the reference signal port index is 1; when the index is a sixteenth value, the reference signal port index corresponding to the index is 12 or 13, and the quantity of port symbols corresponding to the reference signal port index is 1; when the index is a seventeenth value, the reference signal port index corresponding to the index is 14 or 15, and the quantity of port symbols corresponding to the reference signal port index is 1; when the index is an eighteenth value, the reference signal port index corresponding to the index is 16 or 17, and the quantity of port symbols corresponding to the reference signal port index is 1; when the index is a nineteenth value, the reference signal port index corresponding to the index is one or more of the following: 0, 1, or 12, and the quantity of port symbols corresponding to the reference signal port index is 1; when the index is a twentieth value, the reference signal port index corresponding to the index is one or more of the following: 13, 16, or 17, and the quantity of port symbols corresponding to the reference signal port index is 1; when the index is a twenty-first value, the reference signal port index corresponding to the index is one or more of the following: 2, 3, or 14, and the quantity of port symbols corresponding to the reference signal port index is 1; when the index is a twenty-second value, the reference signal port index corresponding to the index is one or more of the following: 0, 1, 12, or 13, and the quantity of port symbols corresponding to the reference signal port index is 1; when the index is a twenty-third value, the reference signal port index corresponding to the index is one or more of the following: 2, 3, 14, or 15, and the quantity of port symbols corresponding to the reference signal port index is 1; when the index is a twenty-fourth value, the reference signal port index corresponding to the index is 0, and the quantity of port symbols corresponding to the reference signal port index is 2; when the index is a twenty-fifth value, the reference signal port index corresponding to the index is 1, and the quantity of port symbols corresponding to the reference signal port index is 2; when the index is a twenty-sixth value, the reference signal port index corresponding to the index is 2, and the quantity of port symbols corresponding to the reference signal port index is 2; when the index is a twenty-seventh value, the reference signal port index corresponding to the index is 3, and the quantity of port symbols corresponding to the reference signal port index is 2; when the index is a twenty-eighth value, the reference signal port index corresponding to the index is 4, and the quantity of port symbols corresponding to the reference signal port index is 2; when the index is a twenty-ninth value, the reference signal port index corresponding to the index is 5, and the quantity of port symbols corresponding to the reference signal port index is 2; when the index is a thirtieth value, the reference signal port index corresponding to the index is 6, and the quantity of port symbols corresponding to the reference signal port index is 2; when the index is a thirty-first value, the reference signal port index corresponding to the index is 7, and the quantity of port symbols corresponding to the reference signal port index is 2; when the index is a thirty-second value, the reference signal port index corresponding to the index is 8, and the quantity of port symbols corresponding to the reference signal port index is 2; when the index is a thirty-third value, the reference signal port index corresponding to the index is 9, and the quantity of port symbols corresponding to the reference signal port index is 2; when the index is a thirty-fourth value, the reference signal port index corresponding to the index is 10, and the quantity of port symbols corresponding to the reference signal port index is 2; when the index is a thirty-fifth value, the reference signal port index corresponding to the index is 11, and the quantity of port symbols corresponding to the reference signal port index is 2; when the index is a thirty-sixth value, the reference signal port index corresponding to the index is 12, and the quantity of port symbols corresponding to the reference signal port index is 2; when the index is a thirty-seventh value, the reference signal port index corresponding to the index is 13, and the quantity of port symbols corresponding to the reference signal port index is 2; when the index is a thirty-eighth value, the reference signal port index corresponding to the index is 14, and the quantity of port symbols corresponding to the reference signal port index is 2; when the index is a thirty-ninth value, the reference signal port index corresponding to the index is 15, and the quantity of port symbols corresponding to the reference signal port index is 2; when the index is a fortieth value, the reference signal port index corresponding to the index is 16, and the quantity of port symbols corresponding to the reference signal port index is 2; when the index is a forty-first value, the reference signal port index corresponding to the index is 17, and the quantity of port symbols corresponding to the reference signal port index is 2; when the index is a forty-second value, the reference signal port index corresponding to the index is 18, and the quantity of port symbols corresponding to the reference signal port index is 2; when the index is a forty-third value, the reference signal port index corresponding to the index is 19, and the quantity of port symbols corresponding to the reference signal port index is 2; when the index is a forty-fourth value, the reference signal port index corresponding to the index is 20, and the quantity of port symbols corresponding to the reference signal port index is 2; when the index is a forty-fifth value, the reference signal port index corresponding to the index is 21, and the quantity of port symbols corresponding to the reference signal port index is 2; when the index is a forty-sixth value, the reference signal port index corresponding to the index is 22, and the quantity of port symbols corresponding to the reference signal port index is 2; when the index is a forty-seventh value, the reference signal port index corresponding to the index is 23, and the quantity of port symbols corresponding to the reference signal port index is 2; when the index is a forty-eighth value, the reference signal port index corresponding to the index is 0 or 1, and the quantity of port symbols corresponding to the reference signal port index is 2; when the index is a forty-ninth value, the reference signal port index corresponding to the index is 2 or 3, and the quantity of port symbols corresponding to the reference signal port index is 2; when the index is a fiftieth value, the reference signal port index corresponding to the index is 4 or 5, and the quantity of port symbols corresponding to the reference signal port index is 2; when the index is a fifty-first value, the reference signal port index corresponding to the index is 6 or 7, and the quantity of port symbols corresponding to the reference signal port index is 2; when the index is a fifty-second value, the reference signal port index corresponding to the index is 8 or 9, and the quantity of port symbols corresponding to the reference signal port index is 2; when the index is a fifty-third value, the reference signal port index corresponding to the index is 10 or 11, and the quantity of port symbols corresponding to the reference signal port index is 2; when the index is a fifty-fourth value, the reference signal port index corresponding to the index is 12 or 13, and the quantity of port symbols corresponding to the reference signal port index is 2; when the index is a fifty-fifth value, the reference signal port index corresponding to the index is 14 or 15, and the quantity of port symbols corresponding to the reference signal port index is 2; when the index is a fifty-sixth value, the reference signal port index corresponding to the index is 16 or 17, and the quantity of port symbols corresponding to the reference signal port index is 2; when the index is a fifty-seventh value, the reference signal port index corresponding to the index is 18 or 19, and the quantity of port symbols corresponding to the reference signal port index is 2; when the index is a fifty-eighth value, the reference signal port index corresponding to the index is 20 or 21, and the quantity of port symbols corresponding to the reference signal port index is 2; when the index is a fifty-ninth value, the reference signal port index corresponding to the index is 22 or 23, and the quantity of port symbols corresponding to the reference signal port index is 2; when the index is a sixtieth value, the reference signal port index corresponding to the index is one or more of the following: 0, 1, or 6, and the quantity of port symbols corresponding to the reference signal port index is 2; when the index is a sixty-first value, the reference signal port index corresponding to the index is one or more of the following: 7, 12, or 13, and the quantity of port symbols corresponding to the reference signal port index is 2; when the index is a sixty-second value, the reference signal port index corresponding to the index is one or more of the following: 16, 17, or 18, and the quantity of port symbols corresponding to the reference signal port index is 2; when the index is a sixty-third value, the reference signal port index corresponding to the index is one or more of the following: 19, 22, or 23, and the quantity of port symbols corresponding to the reference signal port index is 2; when the index is a sixty-fourth value, the reference signal port index corresponding to the index is one or more of the following: 2, 3, or 8, and the quantity of port symbols corresponding to the reference signal port index is 2; when the index is a sixty-fifth value, the reference signal port index corresponding to the index is one or more of the following: 9, 14, or 15, and the quantity of port symbols corresponding to the reference signal port index is 2; when the index is a sixty-sixth value, the reference signal port index corresponding to the index is one or more of the following: 4, 5, or 10, and the quantity of port symbols corresponding to the reference signal port index is 2; when the index is a sixty-seventh value, the reference signal port index corresponding to the index is one or more of the following: 0, 1, 6, or 7, and the quantity of port symbols corresponding to the reference signal port index is 2; when the index is a sixty-eighth value, the reference signal port index corresponding to the index is one or more of the following: 12, 13, 16, or 17, and the quantity of port symbols corresponding to the reference signal port index is 2; when the index is a sixty-ninth value, the reference signal port index corresponding to the index is one or more of the following: 18, 19, 22, or 23, and the quantity of port symbols corresponding to the reference signal port index is 2; when the index is a seventieth value, the reference signal port index corresponding to the index is one or more of the following: 2, 3, 8, or 9, and the quantity of port symbols corresponding to the reference signal port index is 2; when the index is a seventy-first value, the reference signal port index corresponding to the index is one or more of the following: 14, 15, 20, or 21, and the quantity of port symbols corresponding to the reference signal port index is 2; or when the index is a seventy-second value, the reference signal port index corresponding to the index is one or more of the following: 4, 5, 10, or 11, and the quantity of port symbols corresponding to the reference signal port index is 2.

In a possible implementation of the first aspect and the second aspect, when the port type of the reference signal is the second type and the quantity of port symbols of the reference signal is 2, in the m code division multiplexing groups, a maximum quantity of orthogonal ports supported by a code division multiplexing group 0 is 16, a maximum quantity of orthogonal ports supported by a code division multiplexing group 1 is 4, and a maximum quantity of orthogonal ports supported by a code division multiplexing group 2 is 4. For a capacity expansion manner of the second type and the quantity of port symbols being 2, refer to the capacity expansion manner of the second type and the quantity of port symbols being 1. Details are not described herein again.

**In** a possible implementation of the first aspect and the second aspect, port indication information indicates a quantity of code division multiplexing groups. For the first type, the port indication information indicates that a quantity of code division multiplexing groups is 2. For the second type, the port indication information indicates that a quantity of code division multiplexing groups is 3.

According to a third aspect, a communication apparatus is provided. The communication apparatus may be a terminal device or a network device, or a chip disposed in the terminal device or the network device. The communication apparatus may implement the method according to the first aspect or the second aspect.

The communication apparatus includes a corresponding module, unit, or means (means) for implementing the foregoing method. The module, unit, or means may be implemented by using hardware, software, or hardware executing corresponding software. The hardware or the software includes one or more modules or units corresponding to the foregoing function.

According to a fourth aspect, a communication apparatus is provided, and includes a transceiver unit. Optionally, the communication apparatus further includes a processing unit. The communication apparatus may implement the method according to the first aspect or the second aspect.

According to a fifth aspect, a communication apparatus is provided, and includes a processor. The processor may be configured to perform the method according to the first aspect or the second aspect.

Optionally, the apparatus further includes a memory, the processor is coupled to the memory, and the processor may be configured to execute instructions in the memory, so that the apparatus performs the method according to the first aspect or the second aspect.

Optionally, the apparatus further includes an interface circuit, and the processor is coupled to the interface circuit. The interface circuit may be a code/data read/write interface circuit, and the interface circuit is configured to receive computer-executable instructions (the computer-executable instructions are stored in the memory, and may be directly read from the memory, or may be read through another component), and transmit the computer-executable instructions to the processor, so that the processor runs the computer-executable instructions to perform the method according to any one of the foregoing aspects.

In some possible designs, the communication apparatus may be a chip or a chip system.

According to a sixth aspect, a communication apparatus is provided, and includes a processor and a memory. The processor is configured to read instructions stored in the memory, may receive a signal via a receiver, and transmits a signal via a transmitter, to perform the method according to the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed in different chips. A type of the memory and a manner in which the memory and the processor are disposed are not limited in this embodiment of this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a seventh aspect, a processor is provided, and includes an input circuit, an output circuit, and a processing circuit. The processing circuit is configured to receive a signal through the input circuit and transmit a signal through the output circuit, so that the processor performs the method according to the first aspect or the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this embodiment of this application.

According to an eighth aspect, a communication apparatus is provided, and includes a logic circuit and an input/output interface. The input/output interface is configured to communicate with a module outside the communication apparatus, and the logic circuit is configured to run a computer program to perform the method according to any one of the foregoing aspects. The communication apparatus may be the terminal device or the network device according to the first aspect or the second aspect, an apparatus including the terminal device or the network device, or an apparatus included in the terminal device or the network device, for example, a chip.

Alternatively, the input/output interface may be a code/data read/write interface circuit, and the input/output interface is configured to receive a computer program (the computer program is stored in a memory, and may be directly read from the memory, or may be read through another component), and transmit the computer program to the input/output interface, so that the input/output interface runs the computer program to perform the method according to any one of the foregoing aspects.

Optionally, the communication apparatus may be a chip.

According to a ninth aspect, a computer program product is provided. The computer program product includes a computer program (which may also be referred to as code or instructions). When the computer program is run, a computer is enabled to perform the method according to the first aspect or the second aspect.

According to a tenth aspect, a computer-readable medium is provided. The computer-readable medium stores a computer program (which may also be referred to as code or instructions). When the computer program is run on a computer, the computer is enabled to perform the method according to the first aspect or the second aspect.

According to an eleventh aspect, a chip system is provided. The chip system includes a processor and an interface, and is configured to support a communication apparatus in implementing a function in the first aspect or the second aspect. In a possible design, the chip system further includes a memory. The memory is configured to store necessary information and data of the communication apparatus. The chip system may include a chip, or may include a chip and another discrete component.

According to a twelfth aspect, a functional entity is provided. The functional entity is configured to implement the methods according to the first aspect and the second aspect.

According to a thirteenth aspect, a communication system is provided, and includes the network device according to the first aspect and the terminal device according to the second aspect.

For technical effects achieved by any one of the designs of the second aspect to the thirteenth aspect, refer to the technical effects achieved by the first aspect. Details are not described again.

### BRIEF DESCRIPTION OF DRAWINGS

FIG. 1 is a diagram of an architecture of a communication system;
FIG. 2 shows a time-frequency resource location of a Type1 DMRS with double symbols;
FIG. 3 shows a time-frequency resource location of a Type2 DMRS with double symbols;
FIG. 4 is a schematic flowchart of a reference signal port indication method according to an embodiment of this application;
FIG. 5 is a diagram of a structure of a communication apparatus according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

The following further describes in detail this application with reference to the accompanying drawings.

The technical solutions in embodiments of this application may be applied to a mobile communication system. For example, the mobile communication system may be a 4th generation (4th Generation, 4G) communication system (for example, a long term evolution (long term evolution, LTE) system), a 5th generation (5th generation, 5G) communication system (for example, a new radio (new radio, NR) system), a 6th generation (6th generation, 6G) communication system, and another future communication system, and may be further applied to a communication system that integrates a plurality of wireless technologies, for example, may be further applied to a system that integrates a non-terrestrial network (non-terrestrial network, NTN) such as an uncrewed aerial vehicle, a satellite communication system, or a high altitude platform station (high altitude platform station, HAPS) communication and a terrestrial mobile communication network.

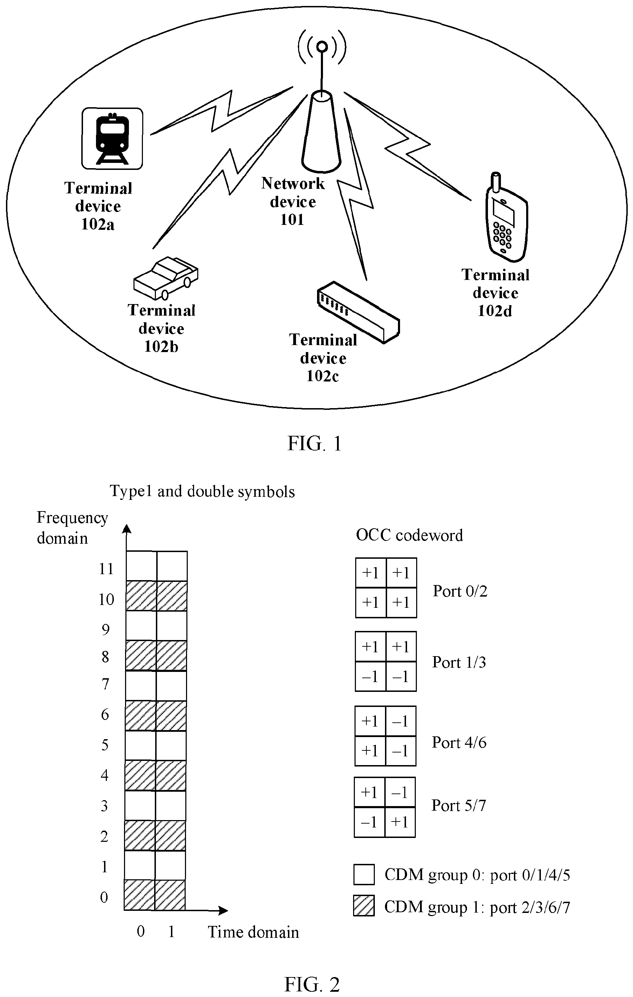

FIG. 1 is a diagram of a communication system. The communication system includes a network device 101 and four terminal devices. The four terminal devices are 102a, 102b, 102c, and 102d respectively. The network device 101 is configured to receive uplink signals from the terminal devices (102a to 102d), or send downlink signals to the terminal devices. The terminal devices (102a to 102d) are configured to send the uplink signals to the network device, or receive the downlink signals from the network device. For example, the network device 101 may send downlink data and demodulation reference signals (demodulation reference signal, DMRS) to the terminal devices (102a to 102d), any one of the terminal devices (102a to 102d) may perform downlink channel estimation based on a received DMRS, and send a DMRS and uplink data to the network device 101, and the network device may perform uplink channel estimation based on the received DMRS.

FIG. 1 is merely an example. A type of the communication system, a quantity and types of devices included in the communication system, and the like are not limited. For example, another communication system to which embodiments of this application may be applied may include one network device and one terminal device, or include a plurality of network devices and one terminal device, and the plurality of network devices may simultaneously serve the terminal device.

The terminal device in embodiments of this application may also be referred to as user equipment (user equipment, UE), a mobile station (mobile station, MS), a mobile terminal (mobile terminal, MT), or the like, and is a device that provides voice or data connectivity for a user, or may be an internet of things device. For example, the terminal device includes a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (such as a smartwatch, a smart band, or a pedometer), a vehicle-mounted device (such as a car, a bicycle, an electric car, an airplane, a ship, a train, or a high-speed rail), a virtual reality (virtual reality, VR) device, an augmented reality (augmented reality, AR) device, a wireless terminal in industrial control (industrial control), a smart home device (such as a refrigerator, a television, an air conditioner, or a meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city, a wireless terminal in a smart home, a flight device (such as an intelligent robot, a hot air balloon, an uncrewed aerial vehicle, or an airplane), or the like. In embodiments of this application, devices implementing the foregoing function are uniformly described by using the terminal device as an example.

The network device in embodiments of this application is a device that is in a network and that is configured to connect the terminal device to a wireless network. The network device may be a node in a radio access network, may also be referred to as a base station, and may further be referred to as a radio access network (radio access network, RAN) node (or device). The network device may be configured to mutually convert a received over-the-air frame and an internet protocol (IP) packet and serve as a router between the terminal device and a rest portion of the access network, where the rest portion of the access network may include an IP network. The network device may further coordinate attribute management of an air interface. For example, the network device may include a long term evolution (long term evolution, LTE) system or an evolved NodeB (NodeB, eNB, or e-NodeB, evolved NodeB) in an LTE-advanced (LTE-Advanced, LTE-A) system, may include a next generation NodeB (next generation NodeB, gNB) in a 5th generation (5th generation, 5G) mobile communication technology new radio (new radio, NR) system, may include a transmission reception point (transmission reception point, TRP), a home base station (for example, a home evolved NodeB, or a home NodeB, HNB), a baseband unit (baseband unit, BBU), a Wi-Fi access point (access point, AP), or the like, or may include a central unit (central unit, CU) and a distributed unit (distributed unit, DU) in a cloud access network (cloud radio access network, CloudRAN) system. This is not limited in embodiments of this application.

To better understand the solutions in embodiments of this application, the following describes technical terms in embodiments of this application.
(1) Code division multiplexing (code division multiplexing, CDM) means that a code group that includes orthogonal codewords is used to carry a plurality of signals. A plurality of users may occupy a same band for communication at the same time. The users use different codewords, and no interference is caused between the users.
(2) Frequency division multiplexing (frequency division multiplexing, FDM) means that a total bandwidth used to transmit a channel is divided into several subbands (also referred to as subchannels) and each subchannel transmits one signal. Users may occupy different bands for communication at the same time, and no interference is caused between the users.
(3) Time division multiplexing (time division multiplexing, TDM) means that time provided for information transmission on an entire channel is divided into several time slices (slots for short), these slots are allocated to all signal sources for use, and each signal exclusively occupies a channel in a slot of the signal for data transmission. A plurality of users may occupy a same band for communication at different time, and no interference is caused between the users.
(4) Orthogonal cover code (orthogonal cover code, OCC): that different OCC codes are orthogonal means that an inner product of any two OCC codes is equal to 0. A same DMRS sequence is multiplied by different OCCs to obtain new sequences, so that the new sequences can be orthogonal, to multiplex a plurality of DMRS ports on a same time-frequency domain resource.
(5) Terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship between associated objects and represents that three relationships may exist. For example, A and/or B may represent the following three cases: Only A exists, both A and B exist, and only B exists. In addition, the character "/" generally indicates an "or" relationship between the associated objects unless otherwise specified. In addition, unless otherwise stated, ordinal numbers such as "first" and "second" in embodiments of this application are for distinguishing between a plurality of objects, but are not intended to limit an order, a time sequence, priorities, or importance of the plurality of objects.

For ease of understanding embodiments of this application, the following describes an application scenario of this application. A network architecture and a service scenario described in embodiments of this application are intended to describe the technical solutions in embodiments of this application more clearly, and do not constitute any limitation on the technical solutions provided in embodiments of this application. A person of ordinary skill in the art may know that as a new service scenario emerges, the technical solutions provided in embodiments of this application are also applicable to a similar technical problem.

To better estimate an equivalent channel and demodulate data, in a MIMO system, one DMRS port is allocated to data at each transport layer, and DMRS ports corresponding to data at a plurality of layers are orthogonal. In an existing related technology, DMRSs may be classified into two types based on a maximum quantity of supported orthogonal ports: Type1 (Type1) and Type2 (Type2). DMRSs may be classified into a single-symbol DMRS and a double-symbol DMRS based on a quantity of orthogonal frequency division multiplexing (orthogonal frequency division multiplexing, OFDM) symbols occupied by the DMRS.

Type1 has the following characteristics: (1) A single symbol supports a maximum of four DMRS ports, and double symbols support a maximum of eight DMRS ports. (2) Two CDM groups are included. (3) Each DMRS port occupies six resource elements (resource element, RE) in each resource block (resource block, RB).

Type2 has the following characteristics: (1) A single symbol supports a maximum of six DMRS ports, and double symbols support a maximum of 12 DMRS ports. (2) Three CDM groups are included. (3) Each DMRS port occupies four REs in each RB.

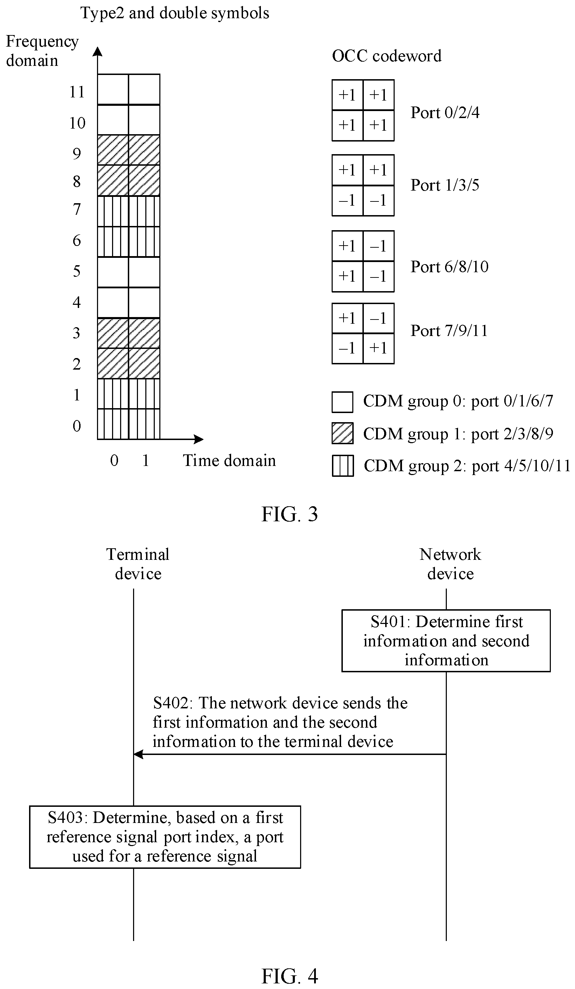

FIG. 2 shows an example of a time-frequency resource location (that is, a DMRS pilot pattern) of a Type1 DMRS with double symbols. FIG. 3 shows an example of a time-frequency resource location (that is, a DMRS pilot pattern) of a Type2 DMRS with double symbols. An x-axis represents a time domain, and may be specifically a quantity of port symbols. A y-axis represents a frequency domain, and may be specifically a quantity of REs (one RB includes 12 REs, and sequence numbers are represented from 0 to 11). It can be learned from FIG. 2 and FIG. 3 that DMRS ports in different CDM groups occupy different REs, to implement orthogonality through FDM, and DMRS ports in a same CDM group occupy a same RE, to implement orthogonality through CDM of an OCC code.

Type1 in FIG. 2 is used as an example. A CDM group 0 includes four DMRS ports whose indexes are 0, 1, 4, and 5, and occupies REs corresponding to "blank grids" in each RB. A CDM group 1 includes four DMRS ports whose indexes are 2, 3, 6, and 7, and occupies REs corresponding to "stripe grids" in each RB. REs corresponding to "blank grids" in one RB may be divided into three groups. REs whose indexes are 11 and 9 are in one group, REs whose indexes are 7 and 5 are in one group, and REs whose indexes are 3 and 1 are in one group. In addition, with reference to the time domain, each group includes four REs (two subcarriers in frequency domain+two symbols in time domain). For REs corresponding to four "blank grids" in each group, four orthogonal DMRS ports are enabled by using an OCC4 formed by FD-OCC2+TD-OCC2. An OCC code of each DMRS port on the four REs is shown in FIG. 2. Each orthogonal DMRS port may be allocated to each layer of data, to estimate an equivalent channel of the layer of data on the four REs. Similarly, REs corresponding to "stripe grids" in one RB may be divided into three groups, and an OCC4 of REs corresponding to "blank grids" is multiplexed for the REs corresponding to the three groups of "stripe grids", to obtain channel estimation of the four orthogonal DMRS ports at different frequency domain positions. To be specific, each RB may obtain channel estimation at three frequency domain positions, and then interpolation and filtering are performed to estimate channels on other REs, so that channels on all REs in one RB are estimated, and then are used to for data demodulation.

For uplink DMRS transmission, a network device indicates a DMRS port to a terminal device, and the terminal device sends a DMRS to the network device through the corresponding DMRS port. For downlink DMRS transmission, the network device also indicates a DMRS port to the terminal device, and the terminal device receives a DMRS from the network device through the corresponding DMRS port.

For example, the network device may send indication information of a DMRS port index to the terminal device by using downlink control information (downlink control information, DCI). The indication information of the DMRS port index may be an index in a correspondence, and the correspondence indicates an association relationship between an index and one or more DMRS port indexes. Further, the correspondence includes a quantity of CDM groups, and the correspondence specifically indicates an association relationship among an index, one or more DMRS port indexes, and a quantity of CDM groups. Further, the correspondence includes a quantity of DMRS symbols, and the correspondence specifically indicates an association relationship among an index, one or more DMRS port indexes, a quantity of CDM groups (optional), and a quantity of DMRS symbols. Further, the correspondence includes a quantity of codewords, and the correspondence specifically indicates an association relationship among an index, one or more DMRS port indexes, a quantity of CDM groups (optional), a quantity of DMRS symbols (optional), and a quantity of codewords. Both the network device and the terminal device maintain these correspondences. In this way, after receiving an index indicated by the network device, the terminal device may determine a corresponding DMRS port index based on the correspondence and the index.

The correspondence may be represented in a form of a table (table). The following Table 1 and Table 2 are tables of a correspondence between an index and a DMRS port index (the port index may also be referred to as a port number) in a current 5G standard.

**Table 1: Antenna port (Antenna port(s)) (1000+DMRS port), dmrs-Type=1, maxLength=1, where dmrs-Type=1 indicates Type1, and maxLength=1 indicates a single symbol. In Table 1, One Codeword indicates that a quantity of codewords is 1, Value indicates an index in a correspondence (that is, indication information of a DMRS port index), Number of DMRS CDM group(s) without data indicates a quantity of CDM groups, and DMRS port(s) indicates a DMRS port index.**

| One codeword: codeword 0 enabled, codeword 1 disabled (One Codeword: Codeword 0 enabled, Codeword 1 disabled) | | |
|---|---|---|
| Index (Value) | Quantity of DMRS CDM groups without data (Number of DMRS CDM group(s) without data) | DMRS port index (DMRS port(s)) |
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0-2 |
| 10 | 2 | 0-3 |
| 11 | 2 | 0, 2 |
| 12-15 | Reserved (Reserved) | Reserved |

**Table 2: (Antenna port(s)) (1000+DMRS port), dmrs-Type=1, maxLength=1.**

| (One Codeword: Codeword 0 enabled, Codeword 1 disabled) | | |
|---|---|---|
| Value | Number of DMRS CDM group(s) without data | DMRS port(s) |
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0-2 |
| 10 | 2 | 0-3 |
| 11 | 2 | 0, 2 |
| 12 | 2 | 0, 2, 3 |
| 13-15 | Reserved | Reserved |

Currently, the 5G standard further includes a table of a correspondence between an index (Value) and a DMRS port index (DMRS port(s)) besides Table 1 and Table 2, for example, a table of a correspondence between an index and a DMRS port index under the condition of Antenna port(s) (1000+DMRS port), dmrs-Type=2 (Type2), maxLength=1; for example, a table of a correspondence between an index and a DMRS port index under the condition of Antenna port(s) (1000+DMRS port), dmrs-Type=2, maxLength=2 (double symbols). For details, refer to Table 7.3.1.2.2-2, Table 7.3.1.2.2-2A, Table 7.3.1.2.2-3, Table 7.3.1.2.2-3A, Table 7.3.1.2.2-4, and Table 7.3.1.2.2-4A in 3GPP protocol TS38.212 specification v16.7.0. Details are not described herein.

With massive growth of 5G devices and development of high-data-rate services, an increase in a quantity of transport layers is becoming a mainstream direction of MIMO evolution. In addition, an advanced signal processing technology that is continuously developed may also allocate DMRS ports to data at a larger quantity of layers, and enable transmission of the data at the larger quantity of layers. To better estimate an equivalent channel and demodulate data, more orthogonal DMRS ports are needed. Based on this, an embodiment of this application provides a reference signal port indication method, to indicate more ports.

### Embodiment 1:

Considering that more orthogonal ports are needed, a longer-FD-OCC solution may be used for port expansion. Because delay spreads of channels (that is, channels between terminal devices and a network device) of different terminal devices may be different, it is difficult to ensure orthogonality of an OCC sequence by using a longer FD-OCC for a terminal device with a large delay spread of a channel. In other words, orthogonality of ports in a same CDM group is damaged, affecting channel estimation performance. Therefore, non-uniform expansion may be performed on ports based on different delay spreads of channels of terminal devices in multi-user scheduling. In an example, if a delay spread of a channel corresponding to a terminal device is greater than a first threshold, it indicates that the delay spread of the terminal device is large, and port expansion is not performed on a CDM group corresponding to a port of the terminal device. If a delay spread of a channel corresponding to a terminal device is less than a first threshold, it indicates that the delay spread of the terminal device is small, and port expansion is performed on a CDM group corresponding to a port of the terminal device.

In a non-uniform port expansion scenario, an embodiment of this application provides a reference signal port indication solution. Refer to FIG. 4. The following steps are included.

S401: A network device determines first information and second information.

S402: The network device sends the first information and the second information to a terminal device, and correspondingly, the terminal device receives the first information and the second information.

The first information indicates reference signal port indexes (for ease of description, the reference signal port index is referred to as a port index below) corresponding to m code division multiplexing groups (represented by CDM groups below), m is an integer greater than or equal to 2, and at least two of the m CDM groups support different quantities of orthogonal ports. The second information indicates a first reference signal port index (referred to as a first port index below) in a reference signal port correspondence indicated by the port indexes corresponding to the m code division multiplexing groups.

S403: The terminal device determines, based on the first reference signal port index, a port used for a reference signal.

In this embodiment of this application, for uplink reference signal transmission, the network device indicates a port index to the terminal device, and the terminal device sends a reference signal to the network device through a port corresponding to the port index. For downlink reference signal transmission, the network device also indicates a port index to the terminal device, and the terminal device receives a reference signal from the network device through a port corresponding to the port index. For ease of differentiation, the port index that needs to be indicated by the network device to the terminal device is referred to as the first port index, and there may be one or more first port indexes. The first port index indicates the port used for the reference signal. Optionally, a value of the port used for the reference signal is obtained by adding a preset value (for example, 1000) to the first port index.

For example, if the reference signal is a DMRS, the port is a DMRS port. The reference signal is used to estimate a status of a channel between the network device and the terminal device. It may be understood as that the reference signal is a demodulation reference signal of the channel between the network device and the terminal device. This example may be applied to downlink DMRS transmission. For downlink DMRS transmission, the channel between the network device and the terminal device is used to carry downlink data. Specifically, a DMRS for downlink transmission is used to perform channel estimation on a physical downlink shared channel (physical downlink shared channel, PDSCH). It should be noted that, in addition to the DMRS, if the reference signal may be a channel state information-reference signal (channel state information-reference signal, CSI-RS), the port is a CSI-RS port; or if the reference signal may be a synchronization signal and physical broadcast channel (physical broadcast channel, PBCH) block (synchronization signal and PBCH block, SSB), the port is an SSB port. This is not limited in this application.

In S401, the network device may determine the first information and the second information based on the port that is used for the reference signal and that needs to be indicated.

The first information may be related to a port type and/or a quantity of port symbols of the reference signal. For example, the first information includes the port type and the quantity of port symbols (which is merely an example, and the port type and the quantity of port symbols may alternatively be indicated by using different messages). The port type is related to a maximum quantity of orthogonal ports supported by the reference signal, and different port types support different maximum quantities of orthogonal ports. For example, the reference signal includes a first type (represented by Type1 below) and a second type (represented by Type2 below) based on different maximum quantities of supported orthogonal ports. Different port types usually correspond to different quantities m of CDM groups. For example, Type1 corresponds to two CDM groups, that is, m=2, and Type2 corresponds to three CDM groups, that is, m=3. The port type of the reference signal may further indicate that a current scenario is a non-uniform expansion scenario. For example, the port type of the reference signal includes Type1 enhanced (enhanced) non-uniform expansion and Type2 enhanced non-uniform expansion. The quantity of port symbols is related to a quantity of symbols occupied by the reference signal. For example, reference signals may include a single symbol (which means that the quantity of port symbols is 1) and double symbols (which means that the quantity of port symbols is 2) based on different quantities of symbols occupied by the reference signals.

In some possible implementations, for a port type, after port expansion, a maximum quantity of orthogonal ports supported by the reference signal are also different based on different quantities of port symbols. For example, after port expansion, in Type1, the single symbol may support eight ports, and the double symbols may support 16 ports; and in Type2, the single symbol may support 12 ports, and the double symbols may support 24 ports. This example is a possible port expansion result.

The first information indicates the port indexes corresponding to the m CDM groups, and the port indexes corresponding to the m CDM groups may be port indexes obtained after port expansion. The port indexes corresponding to the m CDM groups may indicate the reference signal port correspondence (referred to as a correspondence below), the correspondence indicates an association relationship between an index (value) and one or more port indexes (values), and the correspondence may be a correspondence in a table. The table may be a table different from Table 1 and Table 2 that are described above, and Table 7.3.1.2.2-2 to Table 7.3.1.2.2-4A specified in TS38.212 v16.7.0 in R16. In other words, the table is a new table different from a table in an existing standard. An example in which the correspondence is a correspondence in a table is used. S402 is equivalent to indicating, by using the first information, a specific table to be used (that is, a correspondence between an index and a port index, for example, the following Table 3 to Table 8), and S403 is equivalent to indicating, by using the second information, a specific reference signal port index to be used in the foregoing table. In this way, the terminal device may determine, based on the first information and the second information, the first port index indicated by the network device, to determine the port used for the reference signal.

In an implementation, the second information is determined based on a delay spread of the channel of the terminal device. In other words, the second information is related to a delay spread of the channel of the terminal device. The network device may determine several delay spread ranges based on scheduled terminal devices (for example, all scheduled terminal devices), and different delay spread ranges represent different delay spread degrees. For example, a delay spread within a first delay spread range is small, and a delay spread within a second delay spread range is large. For another example, a delay spread in a first delay spread range is small, a delay spread in a second delay spread range is medium, and a delay spread in a third delay spread range is large. Optionally, the delay spread range may be obtained through division based on one or more thresholds. For example, the second information is determined based on the delay spread of the channel of the terminal device and a threshold. If the delay spread of the channel of the terminal device is greater than a first threshold, it indicates that the delay spread of the channel of the terminal device is large. If the delay spread of the channel of the terminal device is less than a first threshold, it indicates that a delay of the channel of the terminal device is small. It should be understood that if the delay spread of the channel of the terminal device is equal to the first threshold, the channel of the terminal device may be determined as a channel with a large delay spread, or the channel of the terminal device may be determined as a channel with a small delay spread. When the second information indicates the first port index, if the delay spread of the channel of the terminal device is large, port indexes corresponding to a CDM group (for example, a CDM group 1 in Type1 or a CDM group 1/CDM group 2 in Type2) with a smallest quantity of a maximum of supported orthogonal ports in the m CDM groups may be indicated to the terminal device; or if the delay of the channel of the terminal device is small, port indexes corresponding to a CDM group (for example, a CDM group 0 in Type1 or a CDM group 0 in Type2) with a largest quantity of a maximum of supported orthogonal ports in the m CMD groups may be indicated to the terminal device.

The first information and the second information may be carried in one message, or may be carried in a plurality of messages. The message herein may be a higher layer indication or a physical layer indication. For example, the first information may be carried in downlink control information (downlink control information, DCI), a higher layer indication, radio resource control (radio resource control, RRC), or a medium access control-control element (medium access control-control element, MAC-CE), and the second information may be carried in DCI, RRC, or a MAC-CE.

In expanded ports, that at least two of the m CDM groups support different quantities of orthogonal ports usually means that the at least two CDM groups support different maximum quantities of orthogonal ports. In a possible port expansion solution, a quantity of CDM groups remains unchanged, and a corresponding expansion multiple is used for each CDM group. In this way, a total quantity of ports can be expanded, and the at least two of the m CDM groups support the different quantities of orthogonal ports. Possible port expansion result: Type1 and the single symbol support a maximum of eight orthogonal ports; Type1 and the double symbols support a maximum of 16 orthogonal ports; Type2 and the single symbol support a maximum of 12 orthogonal ports; and Type2 and the double symbols support a maximum of 24 orthogonal ports. The port expansion result is obtained by expanding each CDM group by using the corresponding expansion multiple based on an existing standard (that is, before port expansion). In the existing standard, Type1 and the single symbol support a maximum of four ports; Type1 and the double symbols support a maximum of eight ports; Type2 and the single symbol support a maximum of six ports; and Type1 and the double symbols support a maximum of 12 ports. The expansion result may specifically include the following possible expansion results:
Possible expansion result 1: In a case of Type1 and the single symbol, in the m CDM groups, a maximum quantity of orthogonal ports supported by the CDM group 0 is 6, and a maximum quantity of orthogonal ports supported by the CDM group 1 is 2. In other words, Type1 and the single symbol may support eight orthogonal ports. The CDM group 0 is obtained by performing three-fold expansion on a CDM group 0 in the existing standard, and the CDM group 1 is obtained by performing one-fold expansion (that is, no expansion) on a CDM group 1 in the existing standard. In this expansion result, a port in the CDM group 0 is allocated to a terminal device with a small delay spread for use, and a port in the CDM group 1 is allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

Specifically, the reference signal port correspondence may include one or more of the following correspondences: when an index is a first value, a reference signal port index (referred to as a port index below) corresponding to the index is 0; when the index is a second value, the port index corresponding to the index is 1; when the index is a third value, the port index corresponding to the index is 2; when the index is a fourth value, the port index corresponding to the index is 3; when the index is a fifth value, the port index corresponding to the index is 8; when the index is a sixth value, the port index corresponding to the index is 9; when the index is a seventh value, the port index corresponding to the index is 10; when the index is an eighth value, the port index corresponding to the index is 11; when the index is a ninth value, the port index corresponding to the index is one or more of the following: 0 or 1; when the index is a tenth value, the port index corresponding to the index is one or more of the following: 2 or 3; when the index is an eleventh value, the port index corresponding to the index is one or more of the following: 8 or 9; when the index is a twelfth value, the port index corresponding to the index is one or more of the following: 10 or 11; when the index is a thirteenth value, the port index corresponding to the index is one or more of the following: 0, 1, or 8; when the index is a fourteenth value, the port index corresponding to the index is one or more of the following: 9, 10, or 11; or when the index is a fifteenth value, the port index corresponding to the index is one or more of the following: 0, 1, 8, or 9.

Further, the correspondence may further include a quantity of CDM groups. In the port expansion solution, the quantity of CDM groups remains unchanged, and the quantity of CDM groups is 2. The quantity of CDM groups indicates a quantity of CDM groups in which one or more port indexes associated with the index are distributed. Further, the correspondence may further include a quantity of port symbols.

The correspondence may be the correspondence in the table. Table 3 is a table of a correspondence between an index and a port index.

**Table 3: (Antenna port(s)) (1000+DMRS port), dmrs-Type=1, maxLength=1. Value indicates an index, Quantity of DMRS CDM groups without data (Number of DMRS CDM group(s) without data) indicates a quantity of CDM groups, and DMRS port(s) indicates a port index.**

| One codeword: codeword 0 enabled, codeword 1 disabled | | |
|---|---|---|
| One Codeword: Codeword 0 enabled, Codeword 1 disabled | | |
| Value | Number of DMRS CDM group(s) without data | DMRS port(s) |
| 0 | 2 | 0 |
| 1 | 2 | 1 |
| 2 | 2 | 2 |
| 3 | 2 | 3 |
| 4 | 2 | 8 |
| 5 | 2 | 9 |
| 6 | 2 | 10 |
| 7 | 2 | 11 |
| 8 | 2 | 0, 1 |
| 9 | 2 | 2, 3 |
| 10 | 2 | 8, 9 |
| 11 | 2 | 10, 11 |
| 12 | 2 | 0, 1, 8 |
| 13 | 2 | 9, 10, 11 |
| 14 | 2 | 0, 1, 8, 9 |
| 15 | 2 | Reserved |

It may be understood that the network device and the terminal device may store all or a part of correspondences among indexes, quantities of CDM groups, and reference signal port indexes in Table 3. In a possible implementation, all or the part of the correspondences in Table 3 may be predefined in a protocol and stored in the network device and the terminal device. An index (Value) in the correspondence in Table 3 is an example rather than a limitation. For example, an index 0 may be replaced with an index 2. In other words, a value of each row in Table 3 is changeable provided that 16 different values can represent correspondences.

Possible expansion result 2: In a case of Type2 and a single symbol, in the m CDM groups, a maximum quantity of orthogonal ports supported by the CDM group 0 is 6, a maximum quantity of orthogonal ports supported by the CDM group 1 is 4, and a maximum quantity of orthogonal ports supported by the CDM group 2 is 2. In other words, Type2 and the single symbol may support 12 orthogonal ports. The CDM group 0 is obtained by performing three-fold expansion on a CDM group 0 in the existing standard, the CDM group 1 is obtained by performing two-fold expansion on a CDM group 1 in the existing standard, and the CDM group 2 is obtained by performing one-fold expansion (that is, no expansion) on a CDM group 2 in the existing standard. In this expansion result, a port in the CDM group 0 is allocated to a terminal device with a small delay spread for use, a port in the CDM group 1 is allocated to a terminal with a medium delay spread for use, and a port in the CDM group 2 is allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

Specifically, the reference signal port correspondence may include one or more of the following correspondences: when an index is a first value, a port index corresponding to the index is 0; when the index is a second value, the port index corresponding to the index is 1; when the index is a third value, the port index corresponding to the index is 2; when the index is a fourth value, the port index corresponding to the index is 3; when the index is a fifth value, the port index corresponding to the index is 4; when the index is a sixth value, the port index corresponding to the index is 5; when the index is a seventh value, the port index corresponding to the index is 12; when the index is an eighth value, the port index corresponding to the index is 13; when the index is a ninth value, the port index corresponding to the index is 14; when the index is a tenth value, the port index corresponding to the index is 15; when the index is an eleventh value, the port index corresponding to the index is 16; when the index is a twelfth value, the port index corresponding to the index is 17; when the index is a thirteenth value, the port index corresponding to the index is 0 or 1; when the index is a fourteenth value, the port index corresponding to the index is 2 or 3; when the index is a fifteenth value, the port index corresponding to the index is 4 or 5; when the index is a sixteenth value, the port index corresponding to the index is 12 or 13; when the index is a seventeenth value, the port index corresponding to the index is 14 or 15; when the index is an eighteenth value, the port index corresponding to the index is 16 or 17; when the index is a nineteenth value, the port index corresponding to the index is one or more of the following: 0, 1, or 12; when the index is a twentieth value, the port index corresponding to the index is one or more of the following: 13, 16, or 17; when the index is a twenty-first value, the port index corresponding to the index is one or more of the following: 2, 3, or 14; when the index is a twenty-second value, the port index corresponding to the index is one or more of the following: 0, 1, 12, or 13; or when the index is a twenty-third value, the port index corresponding to the index is one or more of the following: 2, 3, 14, or 15.

Further, the correspondence may further include a quantity of CDM groups. In the port expansion solution, the quantity of CDM groups remains unchanged, and the quantity of CDM groups is 3. The quantity of CDM groups indicates a quantity of CDM groups in which one or more port indexes associated with the index are distributed. Further, the correspondence may further include a quantity of port symbols.

The correspondence may be the correspondence in the table. Table 4 is a table of a correspondence between an index and a port index.

**Table 4: (Antenna port(s)) (1000+DMRS port), dmrs-Type=2, maxLength=1.**

| One Codeword: Codeword 0 enabled, Codeword 1 disabled | | |
|---|---|---|
| Value | Number of DMRS CDM group(s) without data | DMRS port(s) |
| 0 | 3 | 0 |
| 1 | 3 | 1 |
| 2 | 3 | 2 |
| 3 | 3 | 3 |
| 4 | 3 | 4 |
| 5 | 3 | 5 |
| 6 | 3 | 12 |
| 7 | 3 | 13 |
| 8 | 3 | 14 |
| 9 | 3 | 15 |
| 10 | 3 | 16 |
| 11 | 3 | 17 |
| 12 | 3 | 0, 1 |
| 13 | 3 | 2, 3 |
| 14 | 3 | 4, 5 |
| 15 | 3 | 12, 13 |
| 16 | 3 | 14, 15 |
| 17 | 3 | 16, 17 |
| 18 | 3 | 0, 1, 12 |
| 19 | 3 | 13, 16, 17 |
| 20 | 3 | 2, 3, 14 |
| 21 | 3 | 0, 1, 12, 13 |
| 22 | 3 | 2, 3, 14, 15 |
| 23-31 | 3 | Reserved |

It may be understood that the network device and the terminal device may store all or a part of correspondences among indexes, quantities of CDM groups, and reference signal port indexes in Table 4. In a possible implementation, all or the part of the correspondences in Table 4 may be predefined in a protocol and stored in the network device and the terminal device. An index (Value) in the correspondence in Table 4 is an example rather than a limitation. In other words, a value of each row in Table 4 is changeable provided that 32 different values can represent correspondences.

Possible expansion result 3: In a case of Type2 and the single symbol, in the m CDM groups, a maximum quantity of orthogonal ports supported by the CDM group 0 is 8, a maximum quantity of orthogonal ports supported by the CDM group 1 is 2, and a maximum quantity of orthogonal ports supported by the CDM group 2 is 2. In other words, Type2 and the single symbol may support 12 orthogonal ports. The CDM group 0 is obtained by performing four-fold expansion on a CDM group 0 in the existing standard, the CDM group 1 is obtained by performing one-fold expansion (that is, no expansion) on a CDM group 1 in the existing standard; and the CDM group 2 is obtained by performing one-fold expansion (that is, no expansion) on a CDM group 2 in the existing standard. In this expansion result, a port in the CDM group 0 is allocated to a terminal device with a small delay spread for use, and ports in the CDM group 1 and the CDM group 2 are allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

Specifically, the reference signal port correspondence may include one or more of the following correspondences: when an index is a first value, a port index corresponding to the index is 0; when the index is a second value, the port index corresponding to the index is 1; when the index is a third value, the port index corresponding to the index is 2; when the index is a fourth value, the port index corresponding to the index is 3; when the index is a fifth value, the port index corresponding to the index is 4; when the index is a sixth value, the port index corresponding to the index is 5; when the index is a seventh value, the port index corresponding to the index is 12; when the index is an eighth value, the port index corresponding to the index is 13; when the index is a ninth value, the port index corresponding to the index is 14; when the index is a tenth value, the port index corresponding to the index is 15; when the index is an eleventh value, the port index corresponding to the index is 16; when the index is a twelfth value, the port index corresponding to the index is 17; when the index is a thirteenth value, the port index corresponding to the index is 0 or 1; when the index is a fourteenth value, the port index corresponding to the index is 2 or 3; when the index is a fifteenth value, the port index corresponding to the index is 4 or 5; when the index is a sixteenth value, the port index corresponding to the index is 12 or 13; when the index is a seventeenth value, the port index corresponding to the index is 14 or 15; when the index is an eighteenth value, the port index corresponding to the index is 16 or 17; when the index is a nineteenth value, the port index corresponding to the index is one or more of the following: 0, 1, or 12; when the index is a twentieth value, the port index corresponding to the index is one or more of the following: 13, 14, or 15; when the index is a twenty-first value, the port index corresponding to the index is one or more of the following: 0, 1, 12, or 13; or when the index is a twenty-second value, the port index corresponding to the index is one or more of the following: 14, 15, 16, or 17.

Further, the correspondence may further include a quantity of CDM groups. In the port expansion solution, the quantity of CDM groups remains unchanged, and the quantity of CDM groups is 3. The quantity of CDM groups indicates a quantity of CDM groups in which one or more port indexes associated with the index are distributed. Further, the correspondence may further include a quantity of port symbols.

The correspondence may be the correspondence in the table. Table 5 is a table of a correspondence between an index and a port index.

**Table 5: (Antenna port(s)) (1000+DMRS port), dmrs-Type=2, maxLength=1.**

| One Codeword: Codeword 0 enabled, Codeword 1 disabled | | |
|---|---|---|
| Value | Number of DMRS CDM group(s) without data | DMRS port(s) |
| 0 | 3 | 0 |
| 1 | 3 | 1 |
| 2 | 3 | 2 |
| 3 | 3 | 3 |
| 4 | 3 | 4 |
| 5 | 3 | 5 |
| 6 | 3 | 12 |
| 7 | 3 | 13 |
| 8 | 3 | 14 |
| 9 | 3 | 15 |
| 10 | 3 | 16 |
| 11 | 3 | 17 |
| 12 | 3 | 0, 1 |
| 13 | 3 | 2, 3 |
| 14 | 3 | 4, 5 |
| 15 | 3 | 12, 13 |
| 16 | 3 | 14, 15 |
| 17 | 3 | 16, 17 |
| 18 | 3 | 0, 1, 12 |
| 19 | 3 | 13, 14, 15 |
| 20 | 3 | 0, 1, 12, 13 |
| 21 | 3 | 14, 15, 16, 17 |
| 22-31 | 3 | Reserved |

It may be understood that the network device and the terminal device may store all or a part of correspondences among indexes, quantities of CDM groups, and reference signal port indexes in Table 5. In a possible implementation, all or the part of the correspondences in Table 5 may be predefined in a protocol and stored in the network device and the terminal device. An index (Value) in the correspondence in Table 5 is an example rather than a limitation. In other words, a value of each row in Table 5 is changeable provided that 32 different values can represent correspondences.

Possible expansion result 4: In a case of Type1 and the double symbols, in the m CDM groups, a maximum quantity of orthogonal ports supported by the CDM group 0 is 12, and a maximum quantity of orthogonal ports supported by the CDM group 1 is 4. In other words, Type1 and the single symbol may support 16 orthogonal ports. The CDM group 0 is obtained by performing three-fold expansion on a CDM group 0 in the existing standard, and the CDM group 1 is obtained by performing one-fold expansion (that is, no expansion) on a CDM group 1 in the existing standard. In this expansion result, a port in the CDM group 0 is allocated to a terminal device with a small delay spread for use, and a port in the CDM group 1 is allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

Specifically, the reference signal port correspondence may include one or more of the following correspondences: when an index is a first value, a port index corresponding to the index is 0, and a quantity of port symbols corresponding to the port index is 1; when the index is a second value, the port index corresponding to the index is 1, and the quantity of port symbols corresponding to the port index is 1; when the index is a third value, the port index corresponding to the index is 2, and the quantity of port symbols corresponding to the port index is 1; when the index is a fourth value, the port index corresponding to the index is 3, and the quantity of port symbols corresponding to the port index is 1; when the index is a fifth value, the port index corresponding to the index is 8, and the quantity of port symbols corresponding to the port index is 1; when the index is a sixth value, the port index corresponding to the index is 9, and the quantity of port symbols corresponding to the port index is 1; when the index is a seventh value, the port index corresponding to the index is 10, and the quantity of port symbols corresponding to the port index is 1; when the index is an eighth value, the port index corresponding to the index is 11, and the quantity of port symbols corresponding to the port index is 1; when the index is a ninth value, the port index corresponding to the index is one or more of the following: 0 or 1, and the quantity of port symbols corresponding to the port index is 1; when the index is a tenth value, the port index corresponding to the index is one or more of the following: 2 or 3, and the quantity of port symbols corresponding to the port index is 1; when the index is an eleventh value, the port index corresponding to the index is one or more of the following: 8 or 9, and the quantity of port symbols corresponding to the port index is 1; when the index is a twelfth value, the port index corresponding to the index is one or more of the following: 10 or 11, and the quantity of port symbols corresponding to the port index is 1; when the index is a thirteenth value, the port index corresponding to the index is one or more of the following: 0, 1, or 8, and the quantity of port symbols corresponding to the port index is 1; when the index is a fourteenth value, the port index corresponding to the index is one or more of the following: 9, 10, or 11, and the quantity of port symbols corresponding to the port index is 1; when the index is a fifteenth value, the port index corresponding to the index is one or more of the following: 0, 1, 8, or 9, and the quantity of port symbols corresponding to the port index is 1; when the index is a sixteenth value, the port index corresponding to the index is 0, and the quantity of port symbols corresponding to the port index is 2; when the index is a seventeenth value, the port index corresponding to the index is 1, and the quantity of port symbols corresponding to the port index is 2; when the index is an eighteenth value, the port index corresponding to the index is 2, and the quantity of port symbols corresponding to the port index is 2; when the index is a nineteenth value, the port index corresponding to the index is 3, and the quantity of port symbols corresponding to the port index is 2; when the index is a twentieth value, the port index corresponding to the index is 4, and the quantity of port symbols corresponding to the port index is 2; when the index is a twenty-first value, the port index corresponding to the index is 5, and the quantity of port symbols corresponding to the port index is 2; when the index is a twenty-second value, the port index corresponding to the index is 6, and the quantity of port symbols corresponding to the port index is 2; when the index is a twenty-third value, the port index corresponding to the index is 7, and the quantity of port symbols corresponding to the port index is 2; when the index is a twenty-fourth value, the port index corresponding to the index is 8, and the quantity of port symbols corresponding to the port index is 2; when the index is a twenty-fifth value, the port index corresponding to the index is 9, and the quantity of port symbols corresponding to the port index is 2; when the index is a twenty-sixth value, the port index corresponding to the index is 10, and the quantity of port symbols corresponding to the port index is 2; when the index is a twenty-seventh value, the port index corresponding to the index is 11, and the quantity of port symbols corresponding to the port index is 2; when the index is a twenty-eighth value, the port index corresponding to the index is 12, and the quantity of port symbols corresponding to the port index is 2; when the index is a twenty-ninth value, the port index corresponding to the index is 13, and the quantity of port symbols corresponding to the port index is 2; when the index is a thirtieth value, the port index corresponding to the index is 14, and the quantity of port symbols corresponding to the port index is 2; when the index is a thirty-first value, the port index corresponding to the index is 15, and the quantity of port symbols corresponding to the port index is 2; when the index is a thirty-second value, the port index corresponding to the index is 0 or 1, and the quantity of port symbols corresponding to the port index is 2; when the index is a thirty-third value, the port index corresponding to the index is 2 or 3, and the quantity of port symbols corresponding to the port index is 2; when the index is a thirty-fourth value, the port index corresponding to the index is 4 or 5, and the quantity of port symbols corresponding to the port index is 2; when the index is a thirty-fifth value, the port index corresponding to the index is 6 or 7, and the quantity of port symbols corresponding to the port index is 2; when the index is a thirty-sixth value, the port index corresponding to the index is 8 or 9, and the quantity of port symbols corresponding to the port index is 2; when the index is a thirty-seventh value, the port index corresponding to the index is 10 or 11, and the quantity of port symbols corresponding to the port index is 2; when the index is a thirty-eighth value, the port index corresponding to the index is 12 or 13, and the quantity of port symbols corresponding to the port index is 2; when the index is a thirty-ninth value, the port index corresponding to the index is 14 or 15, and the quantity of port symbols corresponding to the port index is 2; when the index is a fortieth value, the port index corresponding to the index is one or more of the following: 0, 1, or 4, and the quantity of port symbols corresponding to the port index is 2; when the index is a forty-first value, the port index corresponding to the index is one or more of the following: 5, 8, or 9, and the quantity of port symbols corresponding to the port index is 2; when the index is a forty-second value, the port index corresponding to the index is one or more of the following: 10, 11, or 12, and the quantity of port symbols corresponding to the port index is 2; when the index is a forty-third value, the port index corresponding to the index is one or more of the following: 13, 14, or 15, and the quantity of port symbols corresponding to the port index is 2; when the index is a forty-fourth value, the port index corresponding to the index is one or more of the following: 2, 3, or 6, and the quantity of port symbols corresponding to the port index is 2; when the index is a forty-fifth value, the port index corresponding to the index is one or more of the following: 0, 1, 4, or 5, and the quantity of port symbols corresponding to the port index is 2; when the index is a forty-sixth value, the port index corresponding to the index is one or more of the following: 8, 9, 10, or 11, and the quantity of port symbols corresponding to the port index is 2; when the index is a forty-seventh value, the port index corresponding to the index is one or more of the following: 12, 13, 14, or 15, and the quantity of port symbols corresponding to the port index is 2; or when the index is a forty-eighth value, the port index corresponding to the index is one or more of the following: 2, 3, 6, or 7, and the quantity of port symbols corresponding to the port index is 2.

Further, the correspondence may further include a quantity of CDM groups. In the port expansion solution, the quantity of CDM groups is 2.

The correspondence may be the correspondence in the table. Table 6 is a table of a correspondence between an index and a port index.

**Table 6: (Antenna port(s)) (1000+DMRS port), dmrs-Type=1, maxLength=2. A quantity of front-load symbol (Number of front-load symbols) indicates a quantity of port symbols.**

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 2 | 0 | 1 |
| 1 | 2 | 1 | 1 |
| 2 | 2 | 2 | 1 |
| 3 | 2 | 3 | 1 |
| 4 | 2 | 8 | 1 |
| 5 | 2 | 9 | 1 |
| 6 | 2 | 10 | 1 |
| 7 | 2 | 11 | 1 |
| 8 | 2 | 0, 1 | 1 |
| 9 | 2 | 2, 3 | 1 |
| 10 | 2 | 8, 9 | 1 |
| 11 | 2 | 10, 11 | 1 |
| 12 | 2 | 0, 1,8 | 1 |
| 13 | 2 | 9, 10, 11 | 1 |
| 14 | 2 | 0, 1, 8, 9 | 1 |
| 15 | 2 | 0 | 2 |
| 16 | 2 | 1 | 2 |
| 17 | 2 | 2 | 2 |
| 18 | 2 | 3 | 2 |
| 19 | 2 | 4 | 2 |
| 20 | 2 | 5 | 2 |
| 21 | 2 | 6 | 2 |
| 22 | 2 | 7 | 2 |
| 23 | 2 | 8 | 2 |
| 24 | 2 | 9 | 2 |
| 25 | 2 | 10 | 2 |
| 26 | 2 | 11 | 2 |
| 27 | 2 | 12 | 2 |
| 28 | 2 | 13 | 2 |
| 29 | 2 | 14 | 2 |
| 30 | 2 | 15 | 2 |
| 31 | 2 | 0, 1 | 2 |
| 32 | 2 | 2, 3 | 2 |
| 33 | 2 | 4, 5 | 2 |
| 34 | 2 | 6, 7 | 2 |
| 35 | 2 | 8, 9 | 2 |
| 36 | 2 | 10, 11 | 2 |
| 37 | 2 | 12, 13 | 2 |
| 38 | 2 | 14, 15 | 2 |
| 39 | 2 | 0, 1, 4 | 2 |
| 40 | 2 | 5, 8, 9 | 2 |
| 41 | 2 | 10, 11, 12 | 2 |
| 42 | 2 | 13, 14, 15 | 2 |
| 43 | 2 | 2,3,6 | 2 |
| 44 | 2 | 0, 1, 4,5 | 2 |
| 45 | 2 | 8, 9, 10, 11 | 2 |
| 46 | 2 | 12, 13, 14, 15 | 2 |
| 47 | 2 | 2, 3, 6,7 | 2 |
| 48-63 | 2 | Reserved | Reserved |

It may be understood that the network device and the terminal device may store all or a part of correspondences among indexes, quantities of CDM groups, and reference signal port indexes in Table 6. In a possible implementation, all or the part of the correspondences in Table 6 may be predefined in a protocol and stored in the network device and the terminal device. An index (Value) in the correspondence in Table 6 is an example rather than a limitation. In other words, a value of each row in Table 6 is changeable provided that 64 different values can represent correspondences.

Possible expansion result 5: In a case of Type2 and the double symbols, in the m CDM groups, a maximum quantity of orthogonal ports supported by the CDM group 0 is 12, a maximum quantity of orthogonal ports supported by the CDM group 1 is 8, and a maximum quantity of orthogonal ports supported by the CDM group 2 is 4. In other words, Type2 and the double symbols may support 24 orthogonal ports. The CDM group 0 is obtained by performing three-fold expansion on a CDM group 0 in the existing standard, the CDM group 1 is obtained by performing two-fold expansion on a CDM group 1 in the existing standard, and the CDM group 2 is obtained by performing one-fold expansion (that is, no expansion) on a CDM group 2 in the existing standard. In this expansion result, a port in the CDM group 0 is allocated to a terminal device with a small delay spread for use, a port in the CDM group 1 is allocated to a terminal with a medium delay spread for use, and a port in the CDM group 2 is allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

Specifically, the reference signal port correspondence may include one or more of the following correspondences: when an index is a first value, a port index corresponding to the index is 0, and a quantity of port symbols corresponding to the port index is 1; when the index is a second value, the port index corresponding to the index is 1, and the quantity of port symbols corresponding to the port index is 1; when the index is a third value, the port index corresponding to the index is 2, and the quantity of port symbols corresponding to the port index is 1; when the index is a fourth value, the port index corresponding to the index is 3, and the quantity of port symbols corresponding to the port index is 1; when the index is a fifth value, the port index corresponding to the index is 4, and the quantity of port symbols corresponding to the port index is 1; when the index is a sixth value, the port index corresponding to the index is 5, and the quantity of port symbols corresponding to the port index is 1; when the index is a seventh value, the port index corresponding to the index is 12, and the quantity of port symbols corresponding to the port index is 1; when the index is an eighth value, the port index corresponding to the index is 13, and the quantity of port symbols corresponding to the port index is 1; when the index is a ninth value, the port index corresponding to the index is 14, and the quantity of port symbols corresponding to the port index is 1; when the index is a tenth value, the port index corresponding to the index is 15, and the quantity of port symbols corresponding to the port index is 1; when the index is an eleventh value, the port index corresponding to the index is 16, and the quantity of port symbols corresponding to the port index is 1; when the index is a twelfth value, the port index corresponding to the index is 17, and the quantity of port symbols corresponding to the port index is 1; when the index is a thirteenth value, the port index corresponding to the index is 0 or 1, and the quantity of port symbols corresponding to the port index is 1; when the index is a fourteenth value, the port index corresponding to the index is 2 or 3, and the quantity of port symbols corresponding to the port index is 1; when the index is a fifteenth value, the port index corresponding to the index is 4 or 5, and the quantity of port symbols corresponding to the port index is 1; when the index is a sixteenth value, the port index corresponding to the index is 12 or 13, and the quantity of port symbols corresponding to the port index is 1; when the index is a seventeenth value, the port index corresponding to the index is 14 or 15, and the quantity of port symbols corresponding to the port index is 1; when the index is an eighteenth value, the port index corresponding to the index is 16 or 17, and the quantity of port symbols corresponding to the port index is 1; when the index is a nineteenth value, the port index corresponding to the index is one or more of the following: 0, 1, or 12, and the quantity of port symbols corresponding to the port index is 1; when the index is a twentieth value, the port index corresponding to the index is one or more of the following: 13, 16, or 17, and the quantity of port symbols corresponding to the port index is 1; when the index is a twenty-first value, the port index corresponding to the index is one or more of the following: 2, 3, or 14, and the quantity of port symbols corresponding to the port index is 1; when the index is a twenty-second value, the port index corresponding to the index is one or more of the following: 0, 1, 12, or 13, and the quantity of port symbols corresponding to the port index is 1; when the index is a twenty-third value, the port index corresponding to the index is one or more of the following: 2, 3, 14, or 15, and the quantity of port symbols corresponding to the port index is 1; when the index is a twenty-fourth value, the port index corresponding to the index is 0, and the quantity of port symbols corresponding to the port index is 2; when the index is a twenty-fifth value, the port index corresponding to the index is 1, and the quantity of port symbols corresponding to the port index is 2; when the index is a twenty-sixth value, the port index corresponding to the index is 2, and the quantity of port symbols corresponding to the port index is 2; when the index is a twenty-seventh value, the port index corresponding to the index is 3, and the quantity of port symbols corresponding to the port index is 2; when the index is a twenty-eighth value, the port index corresponding to the index is 4, and the quantity of port symbols corresponding to the port index is 2; when the index is a twenty-ninth value, the port index corresponding to the index is 5, and the quantity of port symbols corresponding to the port index is 2; when the index is a thirtieth value, the port index corresponding to the index is 6, and the quantity of port symbols corresponding to the port index is 2; when the index is a thirty-first value, the port index corresponding to the index is 7, and the quantity of port symbols corresponding to the port index is 2; when the index is a thirty-second value, the port index corresponding to the index is 8, and the quantity of port symbols corresponding to the port index is 2; when the index is a thirty-third value, the port index corresponding to the index is 9, and the quantity of port symbols corresponding to the port index is 2; when the index is a thirty-fourth value, the port index corresponding to the index is 10, and the quantity of port symbols corresponding to the port index is 2; when the index is a thirty-fifth value, the port index corresponding to the index is 11, and the quantity of port symbols corresponding to the port index is 2; when the index is a thirty-sixth value, the port index corresponding to the index is 12, and the quantity of port symbols corresponding to the port index is 2; when the index is a thirty-seventh value, the port index corresponding to the index is 13, and the quantity of port symbols corresponding to the port index is 2; when the index is a thirty-eighth value, the port index corresponding to the index is 14, and the quantity of port symbols corresponding to the port index is 2; when the index is a thirty-ninth value, the port index corresponding to the index is 15, and the quantity of port symbols corresponding to the port index is 2; when the index is a fortieth value, the port index corresponding to the index is 16, and the quantity of port symbols corresponding to the port index is 2; when the index is a forty-first value, the port index corresponding to the index is 17, and the quantity of port symbols corresponding to the port index is 2; when the index is a forty-second value, the port index corresponding to the index is 18, and the quantity of port symbols corresponding to the port index is 2; when the index is a forty-third value, the port index corresponding to the index is 19, and the quantity of port symbols corresponding to the port index is 2; when the index is a forty-fourth value, the port index corresponding to the index is 20, and the quantity of port symbols corresponding to the port index is 2; when the index is a forty-fifth value, the port index corresponding to the index is 21, and the quantity of port symbols corresponding to the port index is 2; when the index is a forty-sixth value, the port index corresponding to the index is 22, and the quantity of port symbols corresponding to the port index is 2; when the index is a forty-seventh value, the port index corresponding to the index is 23, and the quantity of port symbols corresponding to the port index is 2; when the index is a forty-eighth value, the port index corresponding to the index is 0 or 1, and the quantity of port symbols corresponding to the port index is 2; when the index is a forty-ninth value, the port index corresponding to the index is 2 or 3, and the quantity of port symbols corresponding to the port index is 2; when the index is a fiftieth value, the port index corresponding to the index is 4 or 5, and the quantity of port symbols corresponding to the port index is 2; when the index is a fifty-first value, the port index corresponding to the index is 6 or 7, and the quantity of port symbols corresponding to the port index is 2; when the index is a fifty-second value, the port index corresponding to the index is 8 or 9, and the quantity of port symbols corresponding to the port index is 2; when the index is a fifty-third value, the port index corresponding to the index is 10 or 11, and the quantity of port symbols corresponding to the port index is 2; when the index is a fifty-fourth value, the port index corresponding to the index is 12 or 13, and the quantity of port symbols corresponding to the port index is 2; when the index is a fifty-fifth value, the port index corresponding to the index is 14 or 15, and the quantity of port symbols corresponding to the port index is 2; when the index is a fifty-sixth value, the port index corresponding to the index is 16 or 17, and the quantity of port symbols corresponding to the port index is 2; when the index is a fifty-seventh value, the port index corresponding to the index is 18 or 19, and the quantity of port symbols corresponding to the port index is 2; when the index is a fifty-eighth value, the port index corresponding to the index is 20 or 21, and the quantity of port symbols corresponding to the port index is 2; when the index is a fifty-ninth value, the port index corresponding to the index is 22 or 23, and the quantity of port symbols corresponding to the port index is 2; when the index is a sixtieth value, the port index corresponding to the index is one or more of the following: 0, 1, or 6, and the quantity of port symbols corresponding to the port index is 2; when the index is a sixty-first value, the port index corresponding to the index is one or more of the following: 7, 12, or 13, and the quantity of port symbols corresponding to the port index is 2; when the index is a sixty-second value, the port index corresponding to the index is one or more of the following: 16, 17, or 18, and the quantity of port symbols corresponding to the port index is 2; when the index is a sixty-third value, the port index corresponding to the index is one or more of the following: 19, 22, or 23, and the quantity of port symbols corresponding to the port index is 2; when the index is a sixty-fourth value, the port index corresponding to the index is one or more of the following: 2, 3, or 8, and the quantity of port symbols corresponding to the port index is 2; when the index is a sixty-fifth value, the port index corresponding to the index is one or more of the following: 9, 14, or 15, and the quantity of port symbols corresponding to the port index is 2; when the index is a sixty-sixth value, the port index corresponding to the index is one or more of the following: 4, 5, or 10, and the quantity of port symbols corresponding to the port index is 2; when the index is a sixty-seventh value, the port index corresponding to the index is one or more of the following: 0, 1, 6, or 7, and the quantity of port symbols corresponding to the port index is 2; when the index is a sixty-eighth value, the port index corresponding to the index is one or more of the following: 12, 13, 16, or 17, and the quantity of port symbols corresponding to the port index is 2; when the index is a sixty-ninth value, the port index corresponding to the index is one or more of the following: 18, 19, 22, or 23, and the quantity of port symbols corresponding to the port index is 2; when the index is a seventieth value, the port index corresponding to the index is one or more of the following: 2, 3, 8, or 9, and the quantity of port symbols corresponding to the port index is 2; when the index is a seventy-first value, the port index corresponding to the index is one or more of the following: 14, 15, 20, or 21, and the quantity of port symbols corresponding to the port index is 2; or when the index is a seventy-second value, the port index corresponding to the index is one or more of the following: 4, 5, 10, or 11, and the quantity of port symbols corresponding to the port index is 2.

Further, the correspondence may further include a quantity of CDM groups. In the port expansion solution, the quantity of CDM groups is 3.

The correspondence may be the correspondence in the table. Table 7 is a table of a correspondence between an index and a port index.

**Table 7: (Antenna port(s)) (1000+DMRS port), dmrs-Type=2, maxLength=2.**

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 3 | 0 | 1 |
| 1 | 3 | 1 | 1 |
| 2 | 3 | 2 | 1 |
| 3 | 3 | 3 | 1 |
| 4 | 3 | 4 | 1 |
| 5 | 3 | 5 | 1 |
| 6 | 3 | 12 | 1 |
| 7 | 3 | 13 | 1 |
| 8 | 3 | 14 | 1 |
| 9 | 3 | 15 | 1 |
| 10 | 3 | 16 | 1 |
| 11 | 3 | 17 | 1 |
| 12 | 3 | 0, 1 | 1 |
| 13 | 3 | 2, 3 | 1 |
| 14 | 3 | 4, 5 | 1 |
| 15 | 3 | 12, 13 | 1 |
| 16 | 3 | 14, 15 | 1 |
| 17 | 3 | 16, 17 | 1 |
| 18 | 3 | 0, 1, 12 | 1 |
| 19 | 3 | 13, 16, 17 | 1 |
| 20 | 3 | 2, 3, 14 | 1 |
| 21 | 3 | 0, 1, 12, 13 | 1 |
| 22 | 3 | 2, 3, 14, 15 | 1 |
| 23 | 3 | 0 | 2 |
| 24 | 3 | 1 | 2 |
| 25 | 3 | 2 | 2 |
| 26 | 3 | 3 | 2 |
| 27 | 3 | 4 | 2 |
| 28 | 3 | 5 | 2 |
| 29 | 3 | 6 | 2 |
| 30 | 3 | 7 | 2 |
| 31 | 3 | 8 | 2 |
| 32 | 3 | 9 | 2 |
| 33 | 3 | 10 | 2 |
| 34 | 3 | 11 | 2 |
| 35 | 3 | 12 | 2 |
| 36 | 3 | 13 | 2 |
| 37 | 3 | 14 | 2 |
| 38 | 3 | 15 | 2 |
| 39 | 3 | 16 | 2 |
| 40 | 3 | 17 | 2 |
| 41 | 3 | 18 | 2 |
| 42 | 3 | 19 | 2 |
| 43 | 3 | 20 | 2 |
| 44 | 3 | 21 | 2 |
| 45 | 3 | 22 | 2 |
| 46 | 3 | 23 | 2 |
| 47 | 3 | 0,1 | 2 |
| 48 | 3 | 2,3 | 2 |
| 49 | 3 | 4,5 | 2 |
| 50 | 3 | 6,7 | 2 |
| 51 | 3 | 8,9 | 2 |
| 52 | 3 | 10,11 | 2 |
| 53 | 3 | 12,13 | 2 |
| 54 | 3 | 14,15 | 2 |
| 55 | 3 | 16,17 | 2 |
| 56 | 3 | 18,19 | 2 |
| 57 | 3 | 20,21 | 2 |
| 58 | 3 | 22,23 | 2 |
| 59 | 3 | 0, 1, 6 | 2 |
| 60 | 3 | 7, 12, 13 | 2 |
| 61 | 3 | 16, 17, 18 | 2 |
| 62 | 3 | 19, 22, 23 | 2 |
| 63 | 3 | 2,3,8 | 2 |
| 64 | 3 | 9, 14, 15 | 2 |
| 65 | 3 | 4, 5, 10 | 2 |
| 66 | 3 | 0, 1, 6, 7 | 2 |
| 67 | 3 | 12, 13, 16, 17 | 2 |
| 68 | 3 | 18, 19, 22, 23 | 2 |
| 69 | 3 | 2,3,8,9 | 2 |
| 70 | 3 | 14, 15, 20, 21 | 2 |
| 71 | 3 | 4, 5, 10, 11 | 2 |
| 72-127 | 3 | Reserved | Reserved |

It may be understood that the network device and the terminal device may store all or a part of correspondences among indexes, quantities of CDM groups, and reference signal port indexes in Table 7. In a possible implementation, all or the part of the correspondences in Table 7 may be predefined in a protocol and stored in the network device and the terminal device. An index (Value) in the correspondence in Table 7 is an example rather than a limitation. In other words, a value of each row in Table 7 is changeable provided that 128 different values can represent correspondences.

Possible expansion result 6: In a case of Type2 and the double symbols, in the m CDM groups, a maximum quantity of orthogonal ports supported by the CDM group 0 is 16, a maximum quantity of orthogonal ports supported by the CDM group 1 is 4, and a maximum quantity of orthogonal ports supported by the CDM group 2 is 4. In other words, Type2 and the single symbol may support 24 orthogonal ports. The CDM group 0 is obtained by performing four-fold expansion on a CDM group 0 in the existing standard, the CDM group 1 is obtained by performing one-fold expansion (that is, no expansion) on a CDM group 1 in the existing standard; and the CDM group 2 is obtained by performing one-fold expansion (that is, no expansion) on a CDM group 2 in the existing standard. In this expansion result, a port in the CDM group 0 is allocated to a terminal device with a small delay spread for use, and ports in the CDM group 1 and the CDM group 2 are allocated to a terminal device with a large delay spread for use, so that the terminal device with the large delay spread does not overlap another terminal device in delay domain. Therefore, orthogonality between ports can be ensured, and channel estimation accuracy and demodulation performance can be improved.

Specifically, the reference signal port correspondence may include one or more of the following correspondences: in a first table, when an index is a first value, a port index corresponding to the index is 0, and a quantity of port symbols corresponding to the port index is 1; when the index is a second value, the port index corresponding to the index is 1, and the quantity of port symbols corresponding to the port index is 1; when the index is a third value, the port index corresponding to the index is 2, and the quantity of port symbols corresponding to the port index is 1; when the index is a fourth value, the port index corresponding to the index is 3, and the quantity of port symbols corresponding to the port index is 1; when the index is a fifth value, the port index corresponding to the index is 4, and the quantity of port symbols corresponding to the port index is 1; when the index is a sixth value, the port index corresponding to the index is 5, and the quantity of port symbols corresponding to the port index is 1; when the index is a seventh value, the port index corresponding to the index is 12, and the quantity of port symbols corresponding to the port index is 1; when the index is an eighth value, the port index corresponding to the index is 13, and the quantity of port symbols corresponding to the port index is 1; when the index is a ninth value, the port index corresponding to the index is 14, and the quantity of port symbols corresponding to the port index is 1; when the index is a tenth value, the port index corresponding to the index is 15, and the quantity of port symbols corresponding to the port index is 1; when the index is an eleventh value, the port index corresponding to the index is 16, and the quantity of port symbols corresponding to the port index is 1; when the index is a twelfth value, the port index corresponding to the index is 17, and the quantity of port symbols corresponding to the port index is 1; when the index is a thirteenth value, the port index corresponding to the index is 0 or 1, and the quantity of port symbols corresponding to the port index is 1; when the index is a fourteenth value, the port index corresponding to the index is 2 or 3, and the quantity of port symbols corresponding to the port index is 1; when the index is a fifteenth value, the port index corresponding to the index is 4 or 5, and the quantity of port symbols corresponding to the port index is 1; when the index is a sixteenth value, the port index corresponding to the index is 12 or 13, and the quantity of port symbols corresponding to the port index is 1; when the index is a seventeenth value, the port index corresponding to the index is 14 or 15, and the quantity of port symbols corresponding to the port index is 1; when the index is an eighteenth value, the port index corresponding to the index is 16 or 17, and the quantity of port symbols corresponding to the port index is 1; when the index is a nineteenth value, the port index corresponding to the index is one or more of the following: 0, 1, or 12, and the quantity of port symbols corresponding to the port index is 1; when the index is a twentieth value, the port index corresponding to the index is one or more of the following: 13, 14, or 15, and the quantity of port symbols corresponding to the port index is 1; when the index is a twenty-first value, the port index corresponding to the index is one or more of the following: 0, 1, 12, or 13, and the quantity of port symbols corresponding to the port index is 1; when the index is a twenty-second value, the port index corresponding to the index is one or more of the following: 14, 15, 16, or 17, and the quantity of port symbols corresponding to the port index is 1; when the index is a twenty-third value, the port index corresponding to the index is 0, and the quantity of port symbols corresponding to the port index is 2; when the index is a twenty-fourth value, the port index corresponding to the index is 1, and the quantity of port symbols corresponding to the port index is 2; when the index is a twenty-fifth value, the port index corresponding to the index is 2, and the quantity of port symbols corresponding to the port index is 2; when the index is a twenty-sixth value, the port index corresponding to the index is 3, and the quantity of port symbols corresponding to the port index is 2; when the index is a twenty-seventh value, the port index corresponding to the index is 4, and the quantity of port symbols corresponding to the port index is 2; when the index is a twenty-eighth value, the port index corresponding to the index is 5, and the quantity of port symbols corresponding to the port index is 2; when the index is a twenty-ninth value, the port index corresponding to the index is 6, and the quantity of port symbols corresponding to the port index is 2; when the index is a thirtieth value, the port index corresponding to the index is 7, and the quantity of port symbols corresponding to the port index is 2; when the index is a thirty-first value, the port index corresponding to the index is 8, and the quantity of port symbols corresponding to the port index is 2; when the index is a thirty-second value, the port index corresponding to the index is 9, and the quantity of port symbols corresponding to the port index is 2; when the index is a thirty-third value, the port index corresponding to the index is 10, and the quantity of port symbols corresponding to the port index is 2; when the index is a thirty-fourth value, the port index corresponding to the index is 11, and the quantity of port symbols corresponding to the port index is 2; when the index is a thirty-fifth value, the port index corresponding to the index is 12, and the quantity of port symbols corresponding to the port index is 2; when the index is a thirty-sixth value, the port index corresponding to the index is 13, and the quantity of port symbols corresponding to the port index is 2; when the index is a thirty-seventh value, the port index corresponding to the index is 14, and the quantity of port symbols corresponding to the port index is 2; when the index is a thirty-eighth value, the port index corresponding to the index is 15, and the quantity of port symbols corresponding to the port index is 2; when the index is a thirty-ninth value, the port index corresponding to the index is 16, and the quantity of port symbols corresponding to the port index is 2; when the index is a fortieth value, the port index corresponding to the index is 17, and the quantity of port symbols corresponding to the port index is 2; when the index is a forty-first value, the port index corresponding to the index is 18, and the quantity of port symbols corresponding to the port index is 2; when the index is a forty-second value, the port index corresponding to the index is 19, and the quantity of port symbols corresponding to the port index is 2; when the index is a forty-third value, the port index corresponding to the index is 20, and the quantity of port symbols corresponding to the port index is 2; when the index is a forty-fourth value, the port index corresponding to the index is 21, and the quantity of port symbols corresponding to the port index is 2; when the index is a forty-fifth value, the port index corresponding to the index is 22, and the quantity of port symbols corresponding to the port index is 2; when the index is a forty-sixth value, the port index corresponding to the index is 23, and the quantity of port symbols corresponding to the port index is 2; when the index is a forty-seventh value, the port index corresponding to the index is 0 or 1, and the quantity of port symbols corresponding to the port index is 2; when the index is a forty-eighth value, the port index corresponding to the index is 2 or 3, and the quantity of port symbols corresponding to the port index is 2; when the index is a forty-ninth value, the port index corresponding to the index is 4 or 5, and the quantity of port symbols corresponding to the port index is 2; when the index is a fiftieth value, the port index corresponding to the index is 6 or 7, and the quantity of port symbols corresponding to the port index is 2; when the index is a fifty-first value, the port index corresponding to the index is 8 or 9, and the quantity of port symbols corresponding to the port index is 2; when the index is a fifty-second value, the port index corresponding to the index is 10 or 11, and the quantity of port symbols corresponding to the port index is 2; when the index is a fifty-third value, the port index corresponding to the index is 12 or 13, and the quantity of port symbols corresponding to the port index is 2; when the index is a fifty-fourth value, the port index corresponding to the index is 14 or 15, and the quantity of port symbols corresponding to the port index is 2; when the index is a fifty-fifth value, the port index corresponding to the index is 16 or 17, and the quantity of port symbols corresponding to the port index is 2; when the index is a fifty-sixth value, the port index corresponding to the index is 18 or 19, and the quantity of port symbols corresponding to the port index is 2; when the index is a fifty-seventh value, the port index corresponding to the index is 20 or 21, and the quantity of port symbols corresponding to the port index is 2; when the index is a fifty-eighth value, the port index corresponding to the index is 22 or 23, and the quantity of port symbols corresponding to the port index is 2; when the index is a fifty-ninth value, the port index corresponding to the index is 20 or 21, and the quantity of port symbols corresponding to the port index is 2; when the index is a sixtieth value, the port index corresponding to the index is 22 or 23, and the quantity of port symbols corresponding to the port index is 2; when the index is a sixty-first value, the port index corresponding to the index is one or more of the following: 0, 1, or 6, and the quantity of port symbols corresponding to the port index is 2; when the index is a sixty-second value, the port index corresponding to the index is one or more of the following: 7, 12, or 13, and the quantity of port symbols corresponding to the port index is 2; when the index is a sixty-third value, the port index corresponding to the index is one or more of the following: 14, 15, or 16, and the quantity of port symbols corresponding to the port index is 2; when the index is a sixty-fourth value, the port index corresponding to the index is one or more of the following: 17, 18, or 19, and the quantity of port symbols corresponding to the port index is 2; when the index is a sixty-fifth value, the port index corresponding to the index is one or more of the following: 20, 21, or 22, and the quantity of port symbols corresponding to the port index is 2; when the index is a sixty-sixth value, the port index corresponding to the index is one or more of the following: 2, 3, or 8, and the quantity of port symbols corresponding to the port index is 2; when the index is a sixty-seventh value, the port index corresponding to the index is one or more of the following: 4, 5, or 10, and the quantity of port symbols corresponding to the port index is 2; when the index is a sixty-eighth value, the port index corresponding to the index is one or more of the following: 0, 1, 6, or 7, and the quantity of port symbols corresponding to the port index is 2; when the index is a sixty-ninth value, the port index corresponding to the index is one or more of the following: 12, 13, 14, or 15, and the quantity of port symbols corresponding to the port index is 2; when the index is a seventieth value, the port index corresponding to the index is one or more of the following: 16, 17, 18, or 19, and the quantity of port symbols corresponding to the port index is 2; when the index is a seventy-first value, the port index corresponding to the index is one or more of the following: 20, 21, 22, or 23, and the quantity of port symbols corresponding to the port index is 2; when the index is a seventy-second value, the port index corresponding to the index is one or more of the following: 2, 3, 8, or 9, and the quantity of port symbols corresponding to the port index is 2; or when the index is a seventy-third value, the port index corresponding to the index is one or more of the following: 4, 5, 10, or 11, and the quantity of port symbols corresponding to the port index is 2.

Further, the correspondence may further include a quantity of CDM groups. In the port expansion solution, the quantity of CDM groups is 3.

The correspondence may be the correspondence in the table. Table 8 is a table of a correspondence between an index and a port index.

**Table 8: (Antenna port(s)) (1000+DMRS port), dmrs-Type=2, maxLength=1.**

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 3 | 0 | 1 |
| 1 | 3 | 1 | 1 |
| 2 | 3 | 2 | 1 |
| 3 | 3 | 3 | 1 |
| 4 | 3 | 4 | 1 |
| 5 | 3 | 5 | 1 |
| 6 | 3 | 12 | 1 |
| 7 | 3 | 13 | 1 |
| 8 | 3 | 14 | 1 |
| 9 | 3 | 15 | 1 |
| 10 | 3 | 16 | 1 |
| 11 | 3 | 17 | 1 |
| 12 | 3 | 0, 1 | 1 |
| 13 | 3 | 2, 3 | 1 |
| 14 | 3 | 4, 5 | 1 |
| 15 | 3 | 12, 13 | 1 |
| 16 | 3 | 14, 15 | 1 |
| 17 | 3 | 16, 17 | 1 |
| 18 | 3 | 0, 1, 12 | 1 |
| 19 | 3 | 13, 14, 15 | 1 |
| 20 | 3 | 0, 1, 12, 13 | 1 |
| 21 | 3 | 14, 15, 16, 17 | 1 |
| 22 | 3 | 0 | 2 |
| 23 | 3 | 1 | 2 |
| 24 | 3 | 2 | 2 |
| 25 | 3 | 3 | 2 |
| 26 | 3 | 4 | 2 |
| 27 | 3 | 5 | 2 |
| 28 | 3 | 6 | 2 |
| 29 | 3 | 7 | 2 |
| 30 | 3 | 8 | 2 |
| 31 | 3 | 9 | 2 |
| 32 | 3 | 10 | 2 |
| 33 | 3 | 11 | 2 |
| 34 | 3 | 12 | 2 |
| 35 | 3 | 13 | 2 |
| 36 | 3 | 14 | 2 |
| 37 | 3 | 15 | 2 |
| 38 | 3 | 16 | 2 |
| 39 | 3 | 17 | 2 |
| 40 | 3 | 18 | 2 |
| 41 | 3 | 19 | 2 |
| 42 | 3 | 20 | 2 |
| 43 | 3 | 21 | 2 |
| 44 | 3 | 22 | 2 |
| 45 | 3 | 23 | 2 |
| 46 | 3 | 0, 1 | 2 |
| 47 | 3 | 2, 3 | 2 |
| 48 | 3 | 4, 5 | 2 |
| 49 | 3 | 6, 7 | 2 |
| 50 | 3 | 8, 9 | 2 |
| 51 | 3 | 10, 11 | 2 |
| 52 | 3 | 12, 13 | 2 |
| 53 | 3 | 14, 15 | 2 |
| 54 | 3 | 16, 17 | 2 |
| 55 | 3 | 18, 19 | 2 |
| 56 | 3 | 20, 21 | 2 |
| 57 | 3 | 22, 23 | 2 |
| 58 | 3 | 20, 21 | 2 |
| 59 | 3 | 22, 23 | 2 |
| 60 | 3 | 0, 1, 6 | 2 |
| 61 | 3 | 7, 12, 13 | 2 |
| 62 | 3 | 14, 15, 16 | 2 |
| 63 | 3 | 17, 18, 19 | 2 |
| 64 | 3 | 20, 21, 22 | 2 |
| 65 | 3 | 2, 3, 8 | 2 |
| 66 | 3 | 4, 5, 10 | 2 |
| 67 | 3 | 0, 1, 6, 7 | 2 |
| 68 | 3 | 12, 13, 14, 15 | 2 |
| 69 | 3 | 16, 17, 18, 19 | 2 |
| 70 | 3 | 20, 21, 22, 23 | 2 |
| 71 | 3 | 2,3,8,9 | 2 |
| 72 | 3 | 4, 5, 10, 11 | 2 |
| 73-127 | 3 | Reserved | Reserved |

It may be understood that the network device and the terminal device may store all or a part of correspondences among indexes, quantities of CDM groups, and reference signal port indexes in Table 8. In a possible implementation, all or the part of the correspondences in Table 8 may be predefined in a protocol and stored in the network device and the terminal device. An index (Value) in the correspondence in Table 8 is an example rather than a limitation. In other words, a value of each row in Table 8 is changeable provided that 32 different values can represent correspondences.

This embodiment of this application provides the foregoing different correspondences, so that more expanded ports can be indicated, and accuracy of channel estimation and data demodulation can be improved.

### Embodiment 2:

A network device determines, based on delay spreads of n scheduled terminal devices, whether to perform non-uniform expansion on ports or perform uniform expansion on ports, where n is an integer greater than or equal to 1, and the n terminal devices may be a part or all of the terminal devices scheduled by the network device.

Assuming that the network device determines, based on delay spreads of channels of the n terminal devices, that all the n terminal devices are within a same delay spread range, the network device determines to perform uniform expansion on the ports. If the n terminal devices are within more than two delay spread ranges, the network device determines to perform non-uniform expansion on the ports, so that the terminal device with the large delay spread does not overlap another terminal device in delay domain. Therefore, orthogonality between ports can be ensured.

For a port type Type1, during port expansion, a state 1, that is, uniform expansion and a state 2, that is, non-uniform expansion are included. Optionally, Type1 includes one or more of Type1 (in a non-expansion scenario), Type1 enhanced uniform expansion, or Type1 enhanced non-uniform expansion. For a port type Type2, during port expansion, a state 1, that is, uniform expansion, a state 2, that is, non-uniform expansion 1, and a state 3, that is, non-uniform expansion 2 are included. Optionally, Type1 includes one or more of Type2 (in a non-expansion scenario), Type2 enhanced uniform expansion, or Type2 enhanced non-uniform expansion (including Type2 enhanced non-uniform expansion 1 and/or Type2 enhanced non-uniform expansion 2). Three CDM groups in the non-uniform expansion 1 and the non-uniform expansion 2 support different maximum quantities of orthogonal ports or different expansion multiples. For example, in the non-uniform expansion 1, three-fold expansion is performed on a CDM group 0, two-fold expansion is performed on a CDM group 1, and one-fold expansion is performed on a CDM group 2; in the non-uniform expansion 2, four-fold expansion is performed on a CDM group 0, one-fold expansion is performed on a CDM group 1, and one-fold expansion is performed on a CDM group 2.

Type2 includes the non-uniform expansion 1 and the non-uniform expansion 2. For example, one of the network device and the terminal device may be predefined. For example, the network device and the terminal device store the non-uniform expansion 1. For another example, the network device may send third information to the terminal device, where the third information indicates the non-uniform expansion 1 or the non-uniform expansion 2. For the terminal device, the terminal device may select the non-uniform expansion 1 or the non-uniform expansion 2 based on an indication of the third information. In this example, the third information and first information may be carried in one message, or may be carried in a plurality of messages.

For Type1 non-uniform expansion and Type2 non-uniform expansion scenarios, refer to Embodiment 1. Same parts are not described again.

For a Type1 uniform expansion scenario, in the uniform expansion scenario, expansion multiples of all CDM groups in Type1 are the same, and maximum quantities of orthogonal ports supported after the expansion are also the same. For example, in a case of Type1 and a single symbol, two-fold expansion is performed on each CDM group, and a maximum quantity of orthogonal ports supported by each CDM group after the expansion is 4. In a case of Type1 and double symbols, two-fold expansion is performed on each CDM group, and a maximum quantity of orthogonal ports supported by each CDM group after the expansion is 8.

Similarly, for a Type2 uniform expansion scenario, in the uniform expansion scenario, expansion multiples of all CDM groups in Type2 are the same, and maximum quantities of orthogonal ports supported after the expansion are also the same. For example, in a case of Type2 and a single symbol, two-fold expansion is performed on each CDM group, and a maximum quantity of orthogonal ports supported by each CDM group after the expansion is 4. In a case of Type2 and double symbols, two-fold expansion is performed on each CDM group, and a maximum quantity of orthogonal ports supported by each CDM group after the expansion is 8.

In this embodiment of this application, the network device may flexibly select a port expansion multiple of each CDM group based on the delay spread of the scheduled terminal device, to indicate port orthogonal expansion in different scenarios, thereby improving robustness of channel estimation and data demodulation.

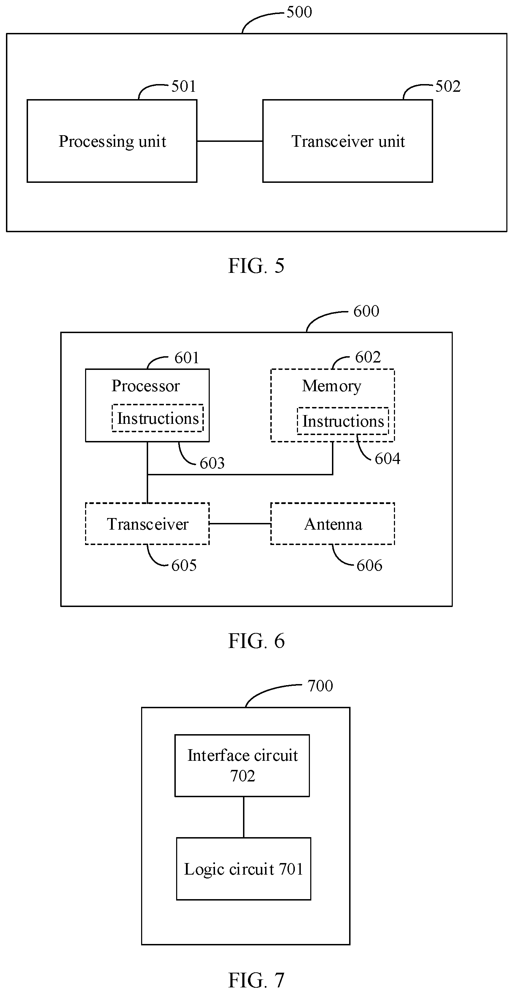

Based on a same technical concept as the foregoing reference signal port indication method, an embodiment of this application further provides a communication apparatus. As shown in FIG. 5, a communication apparatus 500 includes a processing unit 501 and a transceiver unit 502. The communication apparatus 500 may be configured to implement the method described in the foregoing method embodiment. The apparatus 500 may be applied to a terminal device or a network device, or may be located in the terminal device or the network device.

In a possible embodiment, the apparatus 500 is a network device.

The processing unit 501 is configured to determine first information and second information.

The transceiver unit 502 is configured to send the first information to a terminal device based on a port type and a quantity of port symbols, where the first information indicates reference signal port indexes corresponding to m code division multiplexing groups, m is an integer greater than or equal to 2, at least two of the m code division multiplexing groups support different quantities of orthogonal ports, the second information indicates a first reference signal port index in a reference signal port correspondence indicated by the reference signal port indexes corresponding to the m code division multiplexing groups, and the first reference signal port index indicates a port used for a reference signal.

In another possible embodiment, the apparatus 500 is a terminal device.

The transceiver unit 502 is configured to receive first information from a network device, where the first information indicates reference signal port indexes corresponding to m code division multiplexing groups, m is a positive integer greater than or equal to 2, at least two of the m code division multiplexing groups support different quantities of orthogonal ports, and second information indicates a first reference signal port index in a reference signal port correspondence indicated by the reference signal port indexes corresponding to the m code division multiplexing groups.

The processing unit 501 is configured to determine, based on the first reference signal port index, a port used for a reference signal.

In an implementation, the second information is determined based on a delay spread of a channel between the terminal device and the network device.

In an implementation, when the port type of the reference signal is the first type and the quantity of port symbols of the reference signal is 1, in the m code division multiplexing groups, a maximum quantity of orthogonal ports supported by a code division multiplexing group 0 is 6, and a maximum quantity of orthogonal ports supported by a code division multiplexing group 1 is 2.

In an implementation, the reference signal port correspondence includes one or more of the following correspondences: when an index is a first value, a port index corresponding to the index is 0; when the index is a second value, the port index corresponding to the index is 1; when the index is a third value, the port index corresponding to the index is 2; when the index is a fourth value, the port index corresponding to the index is 3; when the index is a fifth value, the port index corresponding to the index is 8; when the index is a sixth value, the port index corresponding to the index is 9; when the index is a seventh value, the port index corresponding to the index is 10; when the index is an eighth value, the port index corresponding to the index is 11; when the index is a ninth value, the port index corresponding to the index is one or more of the following: 0 or 1; when the index is a tenth value, the port index corresponding to the index is one or more of the following: 2 or 3; when the index is an eleventh value, the port index corresponding to the index is one or more of the following: 8 or 9; when the index is a twelfth value, the port index corresponding to the index is one or more of the following: 10 or 11; when the index is a thirteenth value, the port index corresponding to the index is one or more of the following: 0, 1, or 8; when the index is a fourteenth value, the port index corresponding to the index is one or more of the following: 9, 10, or 11; or when the index is a fifteenth value, the port index corresponding to the index is one or more of the following: 0, 1, 8, or 9.

In an implementation, when the port type is the second type and the quantity of port symbols is 1, in the m code division multiplexing groups, a maximum quantity of orthogonal ports supported by a code division multiplexing group 0 is 6, a maximum quantity of orthogonal ports supported by a code division multiplexing group 1 is 4, and a maximum quantity of orthogonal ports supported by a code division multiplexing group 2 is 2.

In an implementation, the reference signal port correspondence includes one or more of the following correspondences: when an index is a first value, a port index corresponding to the index is 0; when the index is a second value, the port index corresponding to the index is 1; when the index is a third value, the port index corresponding to the index is 2; when the index is a fourth value, the port index corresponding to the index is 3; when the index is a fifth value, the port index corresponding to the index is 4; when the index is a sixth value, the port index corresponding to the index is 5; when the index is a seventh value, the port index corresponding to the index is 12; when the index is an eighth value, the port index corresponding to the index is 13; when the index is a ninth value, the port index corresponding to the index is 14; when the index is a tenth value, the port index corresponding to the index is 15; when the index is an eleventh value, the port index corresponding to the index is 16; when the index is a twelfth value, the port index corresponding to the index is 17; when the index is a thirteenth value, the port index corresponding to the index is 0 or 1; when the index is a fourteenth value, the port index corresponding to the index is 2 or 3; when the index is a fifteenth value, the port index corresponding to the index is 4 or 5; when the index is a sixteenth value, the port index corresponding to the index is 12 or 13; when the index is a seventeenth value, the port index corresponding to the index is 14 or 15; when the index is an eighteenth value, the port index corresponding to the index is 16 or 17; when the index is a nineteenth value, the port index corresponding to the index is one or more of the following: 0, 1, or 12; when the index is a twentieth value, the port index corresponding to the index is one or more of the following: 13, 16, or 17; when the index is a twenty-first value, the port index corresponding to the index is one or more of the following: 2, 3, or 14; when the index is a twenty-second value, the port index corresponding to the index is one or more of the following: 0, 1, 12, or 13; or when the index is a twenty-third value, the port index corresponding to the index is one or more of the following: 2, 3, 14, or 15.

In an implementation, when the port type of the reference signal is the second type and the quantity of port symbols of the reference signal is 1, in the m code division multiplexing groups, a maximum quantity of orthogonal ports supported by a code division multiplexing group 0 is 8, a maximum quantity of orthogonal ports supported by a code division multiplexing group 1 is 2, and a maximum quantity of orthogonal ports supported by a code division multiplexing group 2 is 2.

In an implementation, the reference signal port correspondence includes one or more of the following correspondences: when an index is a first value, a port index corresponding to the index is 0; when the index is a second value, the port index corresponding to the index is 1; when the index is a third value, the port index corresponding to the index is 2; when the index is a fourth value, the port index corresponding to the index is 3; when the index is a fifth value, the port index corresponding to the index is 4; when the index is a sixth value, the port index corresponding to the index is 5; when the index is a seventh value, the port index corresponding to the index is 12; when the index is an eighth value, the port index corresponding to the index is 13; when the index is a ninth value, the port index corresponding to the index is 14; when the index is a tenth value, the port index corresponding to the index is 15; when the index is an eleventh value, the port index corresponding to the index is 16; when the index is a twelfth value, the port index corresponding to the index is 17; when the index is a thirteenth value, the port index corresponding to the index is 0 or 1; when the index is a fourteenth value, the port index corresponding to the index is 2 or 3; when the index is a fifteenth value, the port index corresponding to the index is 4 or 5; when the index is a sixteenth value, the port index corresponding to the index is 12 or 13; when the index is a seventeenth value, the port index corresponding to the index is 14 or 15; when the index is an eighteenth value, the port index corresponding to the index is 16 or 17; when the index is a nineteenth value, the port index corresponding to the index is one or more of the following: 0, 1, or 12; when the index is a twentieth value, the port index corresponding to the index is one or more of the following: 13, 14, or 15; when the index is a twenty-first value, the port index corresponding to the index is one or more of the following: 0, 1, 12, or 13; or when the index is a twenty-second value, the port index corresponding to the index is one or more of the following: 14, 15, 16, or 17.

In an implementation, when the port type of the reference signal is the first type and the quantity of port symbols of the reference signal is 2, in the m code division multiplexing groups, a maximum quantity of orthogonal ports supported by a code division multiplexing group 0 is 12, and a maximum quantity of orthogonal ports supported by a code division multiplexing group 1 is 4.

In an implementation, the reference signal port correspondence includes one or more of the following correspondences: when an index is a first value, a port index corresponding to the index is 0, and a quantity of port symbols corresponding to the port index is 1; when the index is a second value, the port index corresponding to the index is 1, and the quantity of port symbols corresponding to the port index is 1; when the index is a third value, the port index corresponding to the index is 2, and the quantity of port symbols corresponding to the port index is 1; when the index is a fourth value, the port index corresponding to the index is 3, and the quantity of port symbols corresponding to the port index is 1; when the index is a fifth value, the port index corresponding to the index is 8, and the quantity of port symbols corresponding to the port index is 1; when the index is a sixth value, the port index corresponding to the index is 9, and the quantity of port symbols corresponding to the port index is 1; when the index is a seventh value, the port index corresponding to the index is 10, and the quantity of port symbols corresponding to the port index is 1; when the index is an eighth value, the port index corresponding to the index is 11, and the quantity of port symbols corresponding to the port index is 1; when the index is a ninth value, the port index corresponding to the index is one or more of the following: 0 or 1, and the quantity of port symbols corresponding to the port index is 1; when the index is a tenth value, the port index corresponding to the index is one or more of the following: 2 or 3, and the quantity of port symbols corresponding to the port index is 1; when the index is an eleventh value, the port index corresponding to the index is one or more of the following: 8 or 9, and the quantity of port symbols corresponding to the port index is 1; when the index is a twelfth value, the port index corresponding to the index is one or more of the following: 10 or 11, and the quantity of port symbols corresponding to the port index is 1; when the index is a thirteenth value, the port index corresponding to the index is one or more of the following: 0, 1, or 8, and the quantity of port symbols corresponding to the port index is 1; when the index is a fourteenth value, the port index corresponding to the index is one or more of the following: 9, 10, or 11, and the quantity of port symbols corresponding to the port index is 1; when the index is a fifteenth value, the port index corresponding to the index is one or more of the following: 0, 1, 8, or 9, and the quantity of port symbols corresponding to the port index is 1; when the index is a sixteenth value, the port index corresponding to the index is 0, and the quantity of port symbols corresponding to the port index is 2; when the index is a seventeenth value, the port index corresponding to the index is 1, and the quantity of port symbols corresponding to the port index is 2; when the index is an eighteenth value, the port index corresponding to the index is 2, and the quantity of port symbols corresponding to the port index is 2; when the index is a nineteenth value, the port index corresponding to the index is 3, and the quantity of port symbols corresponding to the port index is 2; when the index is a twentieth value, the port index corresponding to the index is 4, and the quantity of port symbols corresponding to the port index is 2; when the index is a twenty-first value, the port index corresponding to the index is 5, and the quantity of port symbols corresponding to the port index is 2; when the index is a twenty-second value, the port index corresponding to the index is 6, and the quantity of port symbols corresponding to the port index is 2; when the index is a twenty-third value, the port index corresponding to the index is 7, and the quantity of port symbols corresponding to the port index is 2; when the index is a twenty-fourth value, the port index corresponding to the index is 8, and the quantity of port symbols corresponding to the port index is 2; when the index is a twenty-fifth value, the port index corresponding to the index is 9, and the quantity of port symbols corresponding to the port index is 2; when the index is a twenty-sixth value, the port index corresponding to the index is 10, and the quantity of port symbols corresponding to the port index is 2; when the index is a twenty-seventh value, the port index corresponding to the index is 11, and the quantity of port symbols corresponding to the port index is 2; when the index is a twenty-eighth value, the port index corresponding to the index is 12, and the quantity of port symbols corresponding to the port index is 2; when the index is a twenty-ninth value, the port index corresponding to the index is 13, and the quantity of port symbols corresponding to the port index is 2; when the index is a thirtieth value, the port index corresponding to the index is 14, and the quantity of port symbols corresponding to the port index is 2; when the index is a thirty-first value, the port index corresponding to the index is 15, and the quantity of port symbols corresponding to the port index is 2; when the index is a thirty-second value, the port index corresponding to the index is 0 or 1, and the quantity of port symbols corresponding to the port index is 2; when the index is a thirty-third value, the port index corresponding to the index is 2 or 3, and the quantity of port symbols corresponding to the port index is 2; when the index is a thirty-fourth value, the port index corresponding to the index is 4 or 5, and the quantity of port symbols corresponding to the port index is 2; when the index is a thirty-fifth value, the port index corresponding to the index is 6 or 7, and the quantity of port symbols corresponding to the port index is 2; when the index is a thirty-sixth value, the port index corresponding to the index is 8 or 9, and the quantity of port symbols corresponding to the port index is 2; when the index is a thirty-seventh value, the port index corresponding to the index is 10 or 11, and the quantity of port symbols corresponding to the port index is 2; when the index is a thirty-eighth value, the port index corresponding to the index is 12 or 13, and the quantity of port symbols corresponding to the port index is 2; when the index is a thirty-ninth value, the port index corresponding to the index is 14 or 15, and the quantity of port symbols corresponding to the port index is 2; when the index is a fortieth value, the port index corresponding to the index is one or more of the following: 0, 1, or 4, and the quantity of port symbols corresponding to the port index is 2; when the index is a forty-first value, the port index corresponding to the index is one or more of the following: 5, 8, or 9, and the quantity of port symbols corresponding to the port index is 2; when the index is a forty-second value, the port index corresponding to the index is one or more of the following: 10, 11, or 12, and the quantity of port symbols corresponding to the port index is 2; when the index is a forty-third value, the port index corresponding to the index is one or more of the following: 13, 14, or 15, and the quantity of port symbols corresponding to the port index is 2; when the index is a forty-fourth value, the port index corresponding to the index is one or more of the following: 2, 3, or 6, and the quantity of port symbols corresponding to the port index is 2; when the index is a forty-fifth value, the port index corresponding to the index is one or more of the following: 0, 1, 4, or 5, and the quantity of port symbols corresponding to the port index is 2; when the index is a forty-sixth value, the port index corresponding to the index is one or more of the following: 8, 9, 10, or 11, and the quantity of port symbols corresponding to the port index is 2; when the index is a forty-seventh value, the port index corresponding to the index is one or more of the following: 12, 13, 14, or 15, and the quantity of port symbols corresponding to the port index is 2; or when the index is a forty-eighth value, the port index corresponding to the index is one or more of the following: 2, 3, 6, or 7, and the quantity of port symbols corresponding to the port index is 2.

In an implementation, the reference signal port correspondence further includes that a quantity of code division multiplexing groups is 2.

In an implementation, when the port type of the reference signal is the second type and the quantity of port symbols of the reference signal is 2, in the m code division multiplexing groups, a maximum quantity of orthogonal ports supported by a code division multiplexing group 0 is 12, a maximum quantity of orthogonal ports supported by a code division multiplexing group 1 is 8, and a maximum quantity of orthogonal ports supported by a code division multiplexing group 2 is 4.

In an implementation, the reference signal port correspondence includes one or more of the following correspondences: when an index is a first value, a port index corresponding to the index is 0, and a quantity of port symbols corresponding to the port index is 1; when the index is a second value, the port index corresponding to the index is 1, and the quantity of port symbols corresponding to the port index is 1; when the index is a third value, the port index corresponding to the index is 2, and the quantity of port symbols corresponding to the port index is 1; when the index is a fourth value, the port index corresponding to the index is 3, and the quantity of port symbols corresponding to the port index is 1; when the index is a fifth value, the port index corresponding to the index is 4, and the quantity of port symbols corresponding to the port index is 1; when the index is a sixth value, the port index corresponding to the index is 5, and the quantity of port symbols corresponding to the port index is 1; when the index is a seventh value, the port index corresponding to the index is 12, and the quantity of port symbols corresponding to the port index is 1; when the index is an eighth value, the port index corresponding to the index is 13, and the quantity of port symbols corresponding to the port index is 1; when the index is a ninth value, the port index corresponding to the index is 14, and the quantity of port symbols corresponding to the port index is 1; when the index is a tenth value, the port index corresponding to the index is 15, and the quantity of port symbols corresponding to the port index is 1; when the index is an eleventh value, the port index corresponding to the index is 16, and the quantity of port symbols corresponding to the port index is 1; when the index is a twelfth value, the port index corresponding to the index is 17, and the quantity of port symbols corresponding to the port index is 1; when the index is a thirteenth value, the port index corresponding to the index is 0 or 1, and the quantity of port symbols corresponding to the port index is 1; when the index is a fourteenth value, the port index corresponding to the index is 2 or 3, and the quantity of port symbols corresponding to the port index is 1; when the index is a fifteenth value, the port index corresponding to the index is 4 or 5, and the quantity of port symbols corresponding to the port index is 1; when the index is a sixteenth value, the port index corresponding to the index is 12 or 13, and the quantity of port symbols corresponding to the port index is 1; when the index is a seventeenth value, the port index corresponding to the index is 14 or 15, and the quantity of port symbols corresponding to the port index is 1; when the index is an eighteenth value, the port index corresponding to the index is 16 or 17, and the quantity of port symbols corresponding to the port index is 1; when the index is a nineteenth value, the port index corresponding to the index is one or more of the following: 0, 1, or 12, and the quantity of port symbols corresponding to the port index is 1; when the index is a twentieth value, the port index corresponding to the index is one or more of the following: 13, 16, or 17, and the quantity of port symbols corresponding to the port index is 1; when the index is a twenty-first value, the port index corresponding to the index is one or more of the following: 2, 3, or 14, and the quantity of port symbols corresponding to the port index is 1; when the index is a twenty-second value, the port index corresponding to the index is one or more of the following: 0, 1, 12, or 13, and the quantity of port symbols corresponding to the port index is 1; when the index is a twenty-third value, the port index corresponding to the index is one or more of the following: 2, 3, 14, or 15, and the quantity of port symbols corresponding to the port index is 1; when the index is a twenty-fourth value, the port index corresponding to the index is 0, and the quantity of port symbols corresponding to the port index is 2; when the index is a twenty-fifth value, the port index corresponding to the index is 1, and the quantity of port symbols corresponding to the port index is 2; when the index is a twenty-sixth value, the port index corresponding to the index is 2, and the quantity of port symbols corresponding to the port index is 2; when the index is a twenty-seventh value, the port index corresponding to the index is 3, and the quantity of port symbols corresponding to the port index is 2; when the index is a twenty-eighth value, the port index corresponding to the index is 4, and the quantity of port symbols corresponding to the port index is 2; when the index is a twenty-ninth value, the port index corresponding to the index is 5, and the quantity of port symbols corresponding to the port index is 2; when the index is a thirtieth value, the port index corresponding to the index is 6, and the quantity of port symbols corresponding to the port index is 2; when the index is a thirty-first value, the port index corresponding to the index is 7, and the quantity of port symbols corresponding to the port index is 2; when the index is a thirty-second value, the port index corresponding to the index is 8, and the quantity of port symbols corresponding to the port index is 2; when the index is a thirty-third value, the port index corresponding to the index is 9, and the quantity of port symbols corresponding to the port index is 2; when the index is a thirty-fourth value, the port index corresponding to the index is 10, and the quantity of port symbols corresponding to the port index is 2; when the index is a thirty-fifth value, the port index corresponding to the index is 11, and the quantity of port symbols corresponding to the port index is 2; when the index is a thirty-sixth value, the port index corresponding to the index is 12, and the quantity of port symbols corresponding to the port index is 2; when the index is a thirty-seventh value, the port index corresponding to the index is 13, and the quantity of port symbols corresponding to the port index is 2; when the index is a thirty-eighth value, the port index corresponding to the index is 14, and the quantity of port symbols corresponding to the port index is 2; when the index is a thirty-ninth value, the port index corresponding to the index is 15, and the quantity of port symbols corresponding to the port index is 2; when the index is a fortieth value, the port index corresponding to the index is 16, and the quantity of port symbols corresponding to the port index is 2; when the index is a forty-first value, the port index corresponding to the index is 17, and the quantity of port symbols corresponding to the port index is 2; when the index is a forty-second value, the port index corresponding to the index is 18, and the quantity of port symbols corresponding to the port index is 2; when the index is a forty-third value, the port index corresponding to the index is 19, and the quantity of port symbols corresponding to the port index is 2; when the index is a forty-fourth value, the port index corresponding to the index is 20, and the quantity of port symbols corresponding to the port index is 2; when the index is a forty-fifth value, the port index corresponding to the index is 21, and the quantity of port symbols corresponding to the port index is 2; when the index is a forty-sixth value, the port index corresponding to the index is 22, and the quantity of port symbols corresponding to the port index is 2; when the index is a forty-seventh value, the port index corresponding to the index is 23, and the quantity of port symbols corresponding to the port index is 2; when the index is a forty-eighth value, the port index corresponding to the index is 0 or 1, and the quantity of port symbols corresponding to the port index is 2; when the index is a forty-ninth value, the port index corresponding to the index is 2 or 3, and the quantity of port symbols corresponding to the port index is 2; when the index is a fiftieth value, the port index corresponding to the index is 4 or 5, and the quantity of port symbols corresponding to the port index is 2; when the index is a fifty-first value, the port index corresponding to the index is 6 or 7, and the quantity of port symbols corresponding to the port index is 2; when the index is a fifty-second value, the port index corresponding to the index is 8 or 9, and the quantity of port symbols corresponding to the port index is 2; when the index is a fifty-third value, the port index corresponding to the index is 10 or 11, and the quantity of port symbols corresponding to the port index is 2; when the index is a fifty-fourth value, the port index corresponding to the index is 12 or 13, and the quantity of port symbols corresponding to the port index is 2; when the index is a fifty-fifth value, the port index corresponding to the index is 14 or 15, and the quantity of port symbols corresponding to the port index is 2; when the index is a fifty-sixth value, the port index corresponding to the index is 16 or 17, and the quantity of port symbols corresponding to the port index is 2; when the index is a fifty-seventh value, the port index corresponding to the index is 18 or 19, and the quantity of port symbols corresponding to the port index is 2; when the index is a fifty-eighth value, the port index corresponding to the index is 20 or 21, and the quantity of port symbols corresponding to the port index is 2; when the index is a fifty-ninth value, the port index corresponding to the index is 22 or 23, and the quantity of port symbols corresponding to the port index is 2; when the index is a sixtieth value, the port index corresponding to the index is one or more of the following: 0, 1, or 6, and the quantity of port symbols corresponding to the port index is 2; when the index is a sixty-first value, the port index corresponding to the index is one or more of the following: 7, 12, or 13, and the quantity of port symbols corresponding to the port index is 2; when the index is a sixty-second value, the port index corresponding to the index is one or more of the following: 16, 17, or 18, and the quantity of port symbols corresponding to the port index is 2; when the index is a sixty-third value, the port index corresponding to the index is one or more of the following: 19, 22, or 23, and the quantity of port symbols corresponding to the port index is 2; when the index is a sixty-fourth value, the port index corresponding to the index is one or more of the following: 2, 3, or 8, and the quantity of port symbols corresponding to the port index is 2; when the index is a sixty-fifth value, the port index corresponding to the index is one or more of the following: 9, 14, or 15, and the quantity of port symbols corresponding to the port index is 2; when the index is a sixty-sixth value, the port index corresponding to the index is one or more of the following: 4, 5, or 10, and the quantity of port symbols corresponding to the port index is 2; when the index is a sixty-seventh value, the port index corresponding to the index is one or more of the following: 0, 1, 6, or 7, and the quantity of port symbols corresponding to the port index is 2; when the index is a sixty-eighth value, the port index corresponding to the index is one or more of the following: 12, 13, 16, or 17, and the quantity of port symbols corresponding to the port index is 2; when the index is a sixty-ninth value, the port index corresponding to the index is one or more of the following: 18, 19, 22, or 23, and the quantity of port symbols corresponding to the port index is 2; when the index is a seventieth value, the port index corresponding to the index is one or more of the following: 2, 3, 8, or 9, and the quantity of port symbols corresponding to the port index is 2; when the index is a seventy-first value, the port index corresponding to the index is one or more of the following: 14, 15, 20, or 21, and the quantity of port symbols corresponding to the port index is 2; or when the index is a seventy-second value, the port index corresponding to the index is one or more of the following: 4, 5, 10, or 11, and the quantity of port symbols corresponding to the port index is 2.

In an implementation, when the port type of the reference signal is the second type and the quantity of port symbols of the reference signal is 2, in the m code division multiplexing groups, a maximum quantity of orthogonal ports supported by a code division multiplexing group 0 is 16, a maximum quantity of orthogonal ports supported by a code division multiplexing group 1 is 4, and a maximum quantity of orthogonal ports supported by a code division multiplexing group 2 is 4.

In an implementation, the reference signal port correspondence includes one or more of the following correspondences: in a first table, when an index is a first value, a port index corresponding to the index is 0, and a quantity of port symbols corresponding to the port index is 1; when the index is a second value, the port index corresponding to the index is 1, and the quantity of port symbols corresponding to the port index is 1; when the index is a third value, the port index corresponding to the index is 2, and the quantity of port symbols corresponding to the port index is 1; when the index is a fourth value, the port index corresponding to the index is 3, and the quantity of port symbols corresponding to the port index is 1; when the index is a fifth value, the port index corresponding to the index is 4, and the quantity of port symbols corresponding to the port index is 1; when the index is a sixth value, the port index corresponding to the index is 5, and the quantity of port symbols corresponding to the port index is 1; when the index is a seventh value, the port index corresponding to the index is 12, and the quantity of port symbols corresponding to the port index is 1; when the index is an eighth value, the port index corresponding to the index is 13, and the quantity of port symbols corresponding to the port index is 1; when the index is a ninth value, the port index corresponding to the index is 14, and the quantity of port symbols corresponding to the port index is 1; when the index is a tenth value, the port index corresponding to the index is 15, and the quantity of port symbols corresponding to the port index is 1; when the index is an eleventh value, the port index corresponding to the index is 16, and the quantity of port symbols corresponding to the port index is 1; when the index is a twelfth value, the port index corresponding to the index is 17, and the quantity of port symbols corresponding to the port index is 1; when the index is a thirteenth value, the port index corresponding to the index is 0 or 1, and the quantity of port symbols corresponding to the port index is 1; when the index is a fourteenth value, the port index corresponding to the index is 2 or 3, and the quantity of port symbols corresponding to the port index is 1; when the index is a fifteenth value, the port index corresponding to the index is 4 or 5, and the quantity of port symbols corresponding to the port index is 1; when the index is a sixteenth value, the port index corresponding to the index is 12 or 13, and the quantity of port symbols corresponding to the port index is 1; when the index is a seventeenth value, the port index corresponding to the index is 14 or 15, and the quantity of port symbols corresponding to the port index is 1; when the index is an eighteenth value, the port index corresponding to the index is 16 or 17, and the quantity of port symbols corresponding to the port index is 1; when the index is a nineteenth value, the port index corresponding to the index is one or more of the following: 0, 1, or 12, and the quantity of port symbols corresponding to the port index is 1; when the index is a twentieth value, the port index corresponding to the index is one or more of the following: 13, 14, or 15, and the quantity of port symbols corresponding to the port index is 1; when the index is a twenty-first value, the port index corresponding to the index is one or more of the following: 0, 1, 12, or 13, and the quantity of port symbols corresponding to the port index is 1; when the index is a twenty-second value, the port index corresponding to the index is one or more of the following: 14, 15, 16, or 17, and the quantity of port symbols corresponding to the port index is 1; when the index is a twenty-third value, the port index corresponding to the index is 0, and the quantity of port symbols corresponding to the port index is 2; when the index is a twenty-fourth value, the port index corresponding to the index is 1, and the quantity of port symbols corresponding to the port index is 2; when the index is a twenty-fifth value, the port index corresponding to the index is 2, and the quantity of port symbols corresponding to the port index is 2; when the index is a twenty-sixth value, the port index corresponding to the index is 3, and the quantity of port symbols corresponding to the port index is 2; when the index is a twenty-seventh value, the port index corresponding to the index is 4, and the quantity of port symbols corresponding to the port index is 2; when the index is a twenty-eighth value, the port index corresponding to the index is 5, and the quantity of port symbols corresponding to the port index is 2; when the index is a twenty-ninth value, the port index corresponding to the index is 6, and the quantity of port symbols corresponding to the port index is 2; when the index is a thirtieth value, the port index corresponding to the index is 7, and the quantity of port symbols corresponding to the port index is 2; when the index is a thirty-first value, the port index corresponding to the index is 8, and the quantity of port symbols corresponding to the port index is 2; when the index is a thirty-second value, the port index corresponding to the index is 9, and the quantity of port symbols corresponding to the port index is 2; when the index is a thirty-third value, the port index corresponding to the index is 10, and the quantity of port symbols corresponding to the port index is 2; when the index is a thirty-fourth value, the port index corresponding to the index is 11, and the quantity of port symbols corresponding to the port index is 2; when the index is a thirty-fifth value, the port index corresponding to the index is 12, and the quantity of port symbols corresponding to the port index is 2; when the index is a thirty-sixth value, the port index corresponding to the index is 13, and the quantity of port symbols corresponding to the port index is 2; when the index is a thirty-seventh value, the port index corresponding to the index is 14, and the quantity of port symbols corresponding to the port index is 2; when the index is a thirty-eighth value, the port index corresponding to the index is 15, and the quantity of port symbols corresponding to the port index is 2; when the index is a thirty-ninth value, the port index corresponding to the index is 16, and the quantity of port symbols corresponding to the port index is 2; when the index is a fortieth value, the port index corresponding to the index is 17, and the quantity of port symbols corresponding to the port index is 2; when the index is a forty-first value, the port index corresponding to the index is 18, and the quantity of port symbols corresponding to the port index is 2; when the index is a forty-second value, the port index corresponding to the index is 19, and the quantity of port symbols corresponding to the port index is 2; when the index is a forty-third value, the port index corresponding to the index is 20, and the quantity of port symbols corresponding to the port index is 2; when the index is a forty-fourth value, the port index corresponding to the index is 21, and the quantity of port symbols corresponding to the port index is 2; when the index is a forty-fifth value, the port index corresponding to the index is 22, and the quantity of port symbols corresponding to the port index is 2; when the index is a forty-sixth value, the port index corresponding to the index is 23, and the quantity of port symbols corresponding to the port index is 2; when the index is a forty-seventh value, the port index corresponding to the index is 0 or 1, and the quantity of port symbols corresponding to the port index is 2; when the index is a forty-eighth value, the port index corresponding to the index is 2 or 3, and the quantity of port symbols corresponding to the port index is 2; when the index is a forty-ninth value, the port index corresponding to the index is 4 or 5, and the quantity of port symbols corresponding to the port index is 2; when the index is a fiftieth value, the port index corresponding to the index is 6 or 7, and the quantity of port symbols corresponding to the port index is 2; when the index is a fifty-first value, the port index corresponding to the index is 8 or 9, and the quantity of port symbols corresponding to the port index is 2; when the index is a fifty-second value, the port index corresponding to the index is 10 or 11, and the quantity of port symbols corresponding to the port index is 2; when the index is a fifty-third value, the port index corresponding to the index is 12 or 13, and the quantity of port symbols corresponding to the port index is 2; when the index is a fifty-fourth value, the port index corresponding to the index is 14 or 15, and the quantity of port symbols corresponding to the port index is 2; when the index is a fifty-fifth value, the port index corresponding to the index is 16 or 17, and the quantity of port symbols corresponding to the port index is 2; when the index is a fifty-sixth value, the port index corresponding to the index is 18 or 19, and the quantity of port symbols corresponding to the port index is 2; when the index is a fifty-seventh value, the port index corresponding to the index is 20 or 21, and the quantity of port symbols corresponding to the port index is 2; when the index is a fifty-eighth value, the port index corresponding to the index is 22 or 23, and the quantity of port symbols corresponding to the port index is 2; when the index is a fifty-ninth value, the port index corresponding to the index is 20 or 21, and the quantity of port symbols corresponding to the port index is 2; when the index is a sixtieth value, the port index corresponding to the index is 22 or 23, and the quantity of port symbols corresponding to the port index is 2; when the index is a sixty-first value, the port index corresponding to the index is one or more of the following: 0, 1, or 6, and the quantity of port symbols corresponding to the port index is 2; when the index is a sixty-second value, the port index corresponding to the index is one or more of the following: 7, 12, or 13, and the quantity of port symbols corresponding to the port index is 2; when the index is a sixty-third value, the port index corresponding to the index is one or more of the following: 14, 15, or 16, and the quantity of port symbols corresponding to the port index is 2; when the index is a sixty-fourth value, the port index corresponding to the index is one or more of the following: 17, 18, or 19, and the quantity of port symbols corresponding to the port index is 2; when the index is a sixty-fifth value, the port index corresponding to the index is one or more of the following: 20, 21, or 22, and the quantity of port symbols corresponding to the port index is 2; when the index is a sixty-sixth value, the port index corresponding to the index is one or more of the following: 2, 3, or 8, and the quantity of port symbols corresponding to the port index is 2; when the index is a sixty-seventh value, the port index corresponding to the index is one or more of the following: 4, 5, or 10, and the quantity of port symbols corresponding to the port index is 2; when the index is a sixty-eighth value, the port index corresponding to the index is one or more of the following: 0, 1, 6, or 7, and the quantity of port symbols corresponding to the port index is 2; when the index is a sixty-ninth value, the port index corresponding to the index is one or more of the following: 12, 13, 14, or 15, and the quantity of port symbols corresponding to the port index is 2; when the index is a seventieth value, the port index corresponding to the index is one or more of the following: 16, 17, 18, or 19, and the quantity of port symbols corresponding to the port index is 2; when the index is a seventy-first value, the port index corresponding to the index is one or more of the following: 20, 21, 22, or 23, and the quantity of port symbols corresponding to the port index is 2; when the index is a seventy-second value, the port index corresponding to the index is one or more of the following: 2, 3, 8, or 9, and the quantity of port symbols corresponding to the port index is 2; or when the index is a seventy-third value, the port index corresponding to the index is one or more of the following: 4, 5, 10, or 11, and the quantity of port symbols corresponding to the port index is 2.

In an implementation, the reference signal port correspondence further includes an indication that a quantity of code division multiplexing groups is 3.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, a network device, a terminal device, or the like) or a processor (processor) to perform all or some of the steps of the methods in embodiments of this application.

As shown in FIG. 6, an embodiment of this application further provides a diagram of a structure of a communication apparatus 600. The apparatus 600 may be configured to implement the method described in the foregoing method embodiment. For details, refer to the descriptions in the foregoing method embodiment.

The apparatus 600 includes one or more processors 601. The processor 601 may be a general-purpose processor, a dedicated processor, or the like. For example, the processor may be a baseband processor or a central processing unit. The baseband processor may be configured to process a communication protocol and communication data. The central processing unit may be configured to control a communication apparatus (for example, a base station, a terminal, or a chip), execute a software program, and process data of the software program. The communication apparatus may include a transceiver unit, configured to input (receive) and output (send) signals. For example, the transceiver unit may be a transceiver, a radio frequency chip, or the like.

The apparatus 600 includes the one or more processors 601, and the one or more processors 601 may implement the method in the foregoing embodiment.

Optionally, the processor 601 may further implement another function in addition to the method shown in the foregoing embodiment.

Optionally, in a design, the processor 601 may execute instructions, so that the apparatus 600 performs the method described in the foregoing method embodiment. All or some of the instructions may be stored in the processor, for example, instructions 603; or may be stored in a memory 602 coupled to the processor, for example, instructions 604. The instructions 603 and the instructions 604 may be alternatively used together to enable the apparatus 600 to perform the method described in the foregoing method embodiment. The instructions 603 are also referred to as a computer program.

In another possible design, the communication apparatus 600 may further include a circuit, and the circuit may implement a function in the foregoing method embodiment.

In still another possible design, the apparatus 600 may include one or more memories 602 storing the instructions 604. The instructions may be run on the processor, so that the apparatus 600 performs the method described in the foregoing method embodiment. Optionally, the memory may further store data. Optionally, the processor may also store instructions and/or data. For example, the one or more memories 602 may store the correspondence described in the foregoing embodiment, or the related parameter, table, or the like in the foregoing embodiment. The processor and the memory may be separately disposed, or may be integrated.

In still another possible design, the apparatus 600 may further include a transceiver 605 and an antenna 606. The processor 601 may be referred to as a processing unit, and controls the apparatus (a terminal or a base station). The transceiver 605 may be referred to as a transceiver, a transceiver circuit, a transceiver unit, or the like, and is configured to implement sending and receiving functions of the apparatus through the antenna 606.

The processor may be a general-purpose central processing unit (central processing unit, CPU), a microprocessor, an application-specific integrated circuit (application-specific integrated circuit, ASIC), one or more integrated circuits configured to control program execution of the solutions of this application, a general-purpose processor, a digital signal processor (digital signal processor, DSP), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be in a storage medium, and the storage medium is located in a memory.

The memory may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification is intended to include, but not limited to, these memories and any memory of another proper type. The memory may independently exist and may be connected to the processor through a communication line. The memory may alternatively be integrated with the processor.

It may be understood that the structure shown in FIG. 6 does not constitute a specific limitation on the terminal device and the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

An embodiment of this application further provides a computer-readable medium. The computer-readable medium stores a computer program. When the computer program is executed by a computer, the reference signal port indication method in any one of the foregoing method embodiments is implemented.

An embodiment of this application further provides a computer program product, including a computer program. When the computer program is executed by a computer, the reference signal port indication method in any one of the foregoing method embodiments is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

**In** a possible design, when the communication apparatus is a chip, for example, a chip in a network device, or a chip in a terminal device, the processing unit or the processor 601 may be one or more logic circuits, and the transceiver unit or the transceiver 605 may be an input/output interface, and may also be referred to as a communication interface, an interface circuit, an interface, or the like. Alternatively, the transceiver 605 may be a sending unit and a receiving unit. The sending unit may be an output interface, and the receiving unit may be an input interface. Alternatively, the sending unit and the receiving unit are integrated into one unit, for example, an input/output interface. As shown in FIG. 7, a communication apparatus 700 shown in FIG. 7 includes a logic circuit 701 and an interface circuit 702. To be specific, the processing unit or the processor 601 may be implemented by using the logic circuit 701, and the transceiver unit or the transceiver 605 may be implemented by using the interface circuit 702. The logic circuit 701 may be a chip, a processing circuit, an integrated circuit, a system on chip (system on chip, SoC), or the like. The interface circuit 702 may be a communication interface, an input/output interface, or the like. In this embodiment of this application, the logic circuit may be coupled to the interface circuit. A specific connection manner of the logic circuit and the interface circuit is not limited in embodiments of this application.

In some embodiments of this application, the logic circuit and the interface circuit may be configured to perform functions, operations, or the like performed by the network device or the terminal device.

For example, the logic circuit 701 is configured to determine first information and second information.

The interface circuit 702 is configured to send the first information and the second information to the terminal device.

For the functions or operations performed by the network device or the terminal device, refer to the foregoing method embodiment. Details are not described herein again.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When embodiments are implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely embodiments of the technical solutions of this application, but are not intended to limit the protection scope of this application. Any modification, equivalent replacement, improvement, or the like made within the principle of this application should fall within the protection scope of this application.

## Claims

1. A reference signal port indication method, wherein the method comprises:
determining, by a network device, first information and second information; and
sending, by the network device, the first information and the second information to a terminal device, wherein
the first information indicates reference signal port indexes corresponding to m code division multiplexing groups, m is an integer greater than or equal to 2, at least two of the m code division multiplexing groups support different quantities of orthogonal ports, the second information indicates a first reference signal port index in a reference signal port correspondence indicated by the reference signal port indexes corresponding to the m code division multiplexing groups, and the first reference signal port index indicates a port used for a reference signal.

2. A reference signal port indication method, wherein the method comprises:
receiving, by a terminal device, first information and second information from a network device, wherein the first information indicates reference signal port indexes corresponding to m code division multiplexing groups, m is a positive integer greater than or equal to 2, at least two of the m code division multiplexing groups support different quantities of orthogonal ports, and the second information indicates a first reference signal port index in a reference signal port correspondence indicated by the reference signal port indexes corresponding to the m code division multiplexing groups; and
determining, by the terminal device based on the first reference signal port index, a port used for a reference signal.

3. The method according to claim 1 or 2, wherein the second information is determined based on a delay spread of a channel between the terminal device and the network device.

4. The method according to any one of claims 1 to 3, wherein when a port type of the reference signal is a first type and a quantity of port symbols of the reference signal is 1, in the m code division multiplexing groups, a maximum quantity of orthogonal ports supported by a code division multiplexing group 0 is 6, and a maximum quantity of orthogonal ports supported by a code division multiplexing group 1 is 2.

5. The method according to claim 4, wherein the reference signal port correspondence comprises one or more of the following correspondences:
when an index is a first value, a reference signal port index corresponding to the index is 0;
when the index is a second value, the reference signal port index corresponding to the index is 1;
when the index is a third value, the reference signal port index corresponding to the index is 2;
when the index is a fourth value, the reference signal port index corresponding to the index is 3;
when the index is a fifth value, the reference signal port index corresponding to the index is 8;
when the index is a sixth value, the reference signal port index corresponding to the index is 9;
when the index is a seventh value, the reference signal port index corresponding to the index is 10;
when the index is an eighth value, the reference signal port index corresponding to the index is 11;
when the index is a ninth value, the reference signal port index corresponding to the index is one or more of the following: 0 or 1;
when the index is a tenth value, the reference signal port index corresponding to the index is one or more of the following: 2 or 3;
when the index is an eleventh value, the reference signal port index corresponding to the index is one or more of the following: 8 or 9;
when the index is a twelfth value, the reference signal port index corresponding to the index is one or more of the following: 10 or 11;
when the index is a thirteenth value, the reference signal port index corresponding to the index is one or more of the following: 0, 1, or 8;
when the index is a fourteenth value, the reference signal port index corresponding to the index is one or more of the following: 9, 10, or 11; or
when the index is a fifteenth value, the reference signal port index corresponding to the index is one or more of the following: 0, 1, 8, or 9.

6. The method according to any one of claims 1 to 3, wherein when a port type of the reference signal is a first type and a quantity of port symbols of the reference signal is 2, in the m code division multiplexing groups, a maximum quantity of orthogonal ports supported by a code division multiplexing group 0 is 12, and a maximum quantity of orthogonal ports supported by a code division multiplexing group 1 is 4.

7. The method according to claim 6, wherein the reference signal port correspondence comprises one or more of the following correspondences:
when an index is a first value, a reference signal port index corresponding to the index is 0, and a quantity of port symbols corresponding to the reference signal port index is 1;
when the index is a second value, the reference signal port index corresponding to the index is 1, and the quantity of port symbols corresponding to the reference signal port index is 1;
when the index is a third value, the reference signal port index corresponding to the index is 2, and the quantity of port symbols corresponding to the reference signal port index is 1;
when the index is a fourth value, the reference signal port index corresponding to the index is 3, and the quantity of port symbols corresponding to the reference signal port index is 1;
when the index is a fifth value, the reference signal port index corresponding to the index is 8, and the quantity of port symbols corresponding to the reference signal port index is 1;
when the index is a sixth value, the reference signal port index corresponding to the index is 9, and the quantity of port symbols corresponding to the reference signal port index is 1;
when the index is a seventh value, the reference signal port index corresponding to the index is 10, and the quantity of port symbols corresponding to the reference signal port index is 1;
when the index is an eighth value, the reference signal port index corresponding to the index is 11, and the quantity of port symbols corresponding to the reference signal port index is 1;
when the index is a ninth value, the reference signal port index corresponding to the index is one or more of the following: 0 or 1, and the quantity of port symbols corresponding to the reference signal port index is 1;
when the index is a tenth value, the reference signal port index corresponding to the index is one or more of the following: 2 or 3, and the quantity of port symbols corresponding to the reference signal port index is 1;
when the index is an eleventh value, the reference signal port index corresponding to the index is one or more of the following: 8 or 9, and the quantity of port symbols corresponding to the reference signal port index is 1;
when the index is a twelfth value, the reference signal port index corresponding to the index is one or more of the following: 10 or 11, and the quantity of port symbols corresponding to the reference signal port index is 1;
when the index is a thirteenth value, the reference signal port index corresponding to the index is one or more of the following: 0, 1, or 8, and the quantity of port symbols corresponding to the reference signal port index is 1;
when the index is a fourteenth value, the reference signal port index corresponding to the index is one or more of the following: 9, 10, or 11, and the quantity of port symbols corresponding to the reference signal port index is 1;
when the index is a fifteenth value, the reference signal port index corresponding to the index is one or more of the following: 0, 1, 8, or 9, and the quantity of port symbols corresponding to the reference signal port index is 1;
when the index is a sixteenth value, the reference signal port index corresponding to the index is 0, and the quantity of port symbols corresponding to the reference signal port index is 2;
when the index is a seventeenth value, the reference signal port index corresponding to the index is 1, and the quantity of port symbols corresponding to the reference signal port index is 2;
when the index is an eighteenth value, the reference signal port index corresponding to the index is 2, and the quantity of port symbols corresponding to the reference signal port index is 2;
when the index is a nineteenth value, the reference signal port index corresponding to the index is 3, and the quantity of port symbols corresponding to the reference signal port index is 2;
when the index is a twentieth value, the reference signal port index corresponding to the index is 4, and the quantity of port symbols corresponding to the reference signal port index is 2;
when the index is a twenty-first value, the reference signal port index corresponding to the index is 5, and the quantity of port symbols corresponding to the reference signal port index is 2;
when the index is a twenty-second value, the reference signal port index corresponding to the index is 6, and the quantity of port symbols corresponding to the reference signal port index is 2;
when the index is a twenty-third value, the reference signal port index corresponding to the index is 7, and the quantity of port symbols corresponding to the reference signal port index is 2;
when the index is a twenty-fourth value, the reference signal port index corresponding to the index is 8, and the quantity of port symbols corresponding to the reference signal port index is 2;
when the index is a twenty-fifth value, the reference signal port index corresponding to the index is 9, and the quantity of port symbols corresponding to the reference signal port index is 2;
when the index is a twenty-sixth value, the reference signal port index corresponding to the index is 10, and the quantity of port symbols corresponding to the reference signal port index is 2;
when the index is a twenty-seventh value, the reference signal port index corresponding to the index is 11, and the quantity of port symbols corresponding to the reference signal port index is 2;
when the index is a twenty-eighth value, the reference signal port index corresponding to the index is 12, and the quantity of port symbols corresponding to the reference signal port index is 2;
when the index is a twenty-ninth value, the reference signal port index corresponding to the index is 13, and the quantity of port symbols corresponding to the reference signal port index is 2;
when the index is a thirtieth value, the reference signal port index corresponding to the index is 14, and the quantity of port symbols corresponding to the reference signal port index is 2;
when the index is a thirty-first value, the reference signal port index corresponding to the index is 15, and the quantity of port symbols corresponding to the reference signal port index is 2;
when the index is a thirty-second value, the reference signal port index corresponding to the index is 0 or 1, and the quantity of port symbols corresponding to the reference signal port index is 2;
when the index is a thirty-third value, the reference signal port index corresponding to the index is 2 or 3, and the quantity of port symbols corresponding to the reference signal port index is 2;
when the index is a thirty-fourth value, the reference signal port index corresponding to the index is 4 or 5, and the quantity of port symbols corresponding to the reference signal port index is 2;
when the index is a thirty-fifth value, the reference signal port index corresponding to the index is 6 or 7, and the quantity of port symbols corresponding to the reference signal port index is 2;
when the index is a thirty-sixth value, the reference signal port index corresponding to the index is 8 or 9, and the quantity of port symbols corresponding to the reference signal port index is 2;
when the index is a thirty-seventh value, the reference signal port index corresponding to the index is 10 or 11, and the quantity of port symbols corresponding to the reference signal port index is 2;
when the index is a thirty-eighth value, the reference signal port index corresponding to the index is 12 or 13, and the quantity of port symbols corresponding to the reference signal port index is 2;
when the index is a thirty-ninth value, the reference signal port index corresponding to the index is 14 or 15, and the quantity of port symbols corresponding to the reference signal port index is 2;
when the index is a fortieth value, the reference signal port index corresponding to the index is one or more of the following: 0, 1, or 4, and the quantity of port symbols corresponding to the reference signal port index is 2;
when the index is a forty-first value, the reference signal port index corresponding to the index is one or more of the following: 5, 8, or 9, and the quantity of port symbols corresponding to the reference signal port index is 2;
when the index is a forty-second value, the reference signal port index corresponding to the index is one or more of the following: 10, 11, or 12, and the quantity of port symbols corresponding to the reference signal port index is 2;
when the index is a forty-third value, the reference signal port index corresponding to the index is one or more of the following: 13, 14, or 15, and the quantity of port symbols corresponding to the reference signal port index is 2;
when the index is a forty-fourth value, the reference signal port index corresponding to the index is one or more of the following: 2, 3, or 6, and the quantity of port symbols corresponding to the reference signal port index is 2;
when the index is a forty-fifth value, the reference signal port index corresponding to the index is one or more of the following: 0, 1, 4, or 5, and the quantity of port symbols corresponding to the reference signal port index is 2;
when the index is a forty-sixth value, the reference signal port index corresponding to the index is one or more of the following: 8, 9, 10, or 11, and the quantity of port symbols corresponding to the reference signal port index is 2;
when the index is a forty-seventh value, the reference signal port index corresponding to the index is one or more of the following: 12, 13, 14, or 15, and the quantity of port symbols corresponding to the reference signal port index is 2; or
when the index is a forty-eighth value, the reference signal port index corresponding to the index is one or more of the following: 2, 3, 6, or 7, and the quantity of reference signal port symbols corresponding to the port index is 2.

8. The method according to claim 5 or 7, wherein the reference signal port correspondence further comprises an indication that a quantity of code division multiplexing groups is 2.

9. A communication apparatus, comprising:
a processing unit, configured to determine first information and second information; and
a transceiver unit, configured to send the first information and the second information to a terminal device, wherein
the first information indicates reference signal port indexes corresponding to m code division multiplexing groups, m is an integer greater than or equal to 2, at least two of the m code division multiplexing groups support different quantities of orthogonal ports, the second information indicates a first reference signal port index in a reference signal port correspondence indicated by the reference signal port indexes corresponding to the m code division multiplexing groups, and the first reference signal port index indicates a port used for a reference signal.

10. A communication apparatus, comprising:
a transceiver unit, configured to receive first information and second information from a network device, wherein the first information indicates reference signal port indexes corresponding to m code division multiplexing groups, m is a positive integer greater than or equal to 2, at least two of the m code division multiplexing groups support different quantities of orthogonal ports, and the second information indicates a first reference signal port index in a reference signal port correspondence indicated by the reference signal port indexes corresponding to the m code division multiplexing groups; and
the terminal device determines based on the first reference signal port index, a port used for a reference signal; and
a processing unit, configured to determine, based on the first reference signal port index, a port used for a reference signal.

11. The apparatus according to claim 9 or 10, wherein the second information is determined based on a delay spread of a channel between the terminal device and the network device.

12. The apparatus according to any one of claims 9 to 11, wherein when a port type of the reference signal is a first type and a quantity of port symbols of the reference signal is 1, in the m code division multiplexing groups, a maximum quantity of orthogonal ports supported by a code division multiplexing group 0 is 6, and a maximum quantity of orthogonal ports supported by a code division multiplexing group 1 is 2.

13. The apparatus according to claim 12, wherein the reference signal port correspondence comprises one or more of the following correspondences:
when an index is a first value, a reference signal port index corresponding to the index is 0;
when the index is a second value, the reference signal port index corresponding to the index is 1;
when the index is a third value, the reference signal port index corresponding to the index is 2;
when the index is a fourth value, the reference signal port index corresponding to the index is 3;
when the index is a fifth value, the reference signal port index corresponding to the index is 8;
when the index is a sixth value, the reference signal port index corresponding to the index is 9;
when the index is a seventh value, the reference signal port index corresponding to the index is 10;
when the index is an eighth value, the reference signal port index corresponding to the index is 11;
when the index is a ninth value, the reference signal port index corresponding to the index is one or more of the following: 0 or 1;
when the index is a tenth value, the reference signal port index corresponding to the index is one or more of the following: 2 or 3;
when the index is an eleventh value, the reference signal port index corresponding to the index is one or more of the following: 8 or 9;
when the index is a twelfth value, the reference signal port index corresponding to the index is one or more of the following: 10 or 11;
when the index is a thirteenth value, the reference signal port index corresponding to the index is one or more of the following: 0, 1, or 8;
when the index is a fourteenth value, the reference signal port index corresponding to the index is one or more of the following: 9, 10, or 11; or
when the index is a fifteenth value, the reference signal port index corresponding to the index is one or more of the following: 0, 1, 8, or 9.

14. The apparatus according to any one of claims 9 to 11, wherein when a port type of the reference signal is a first type and a quantity of port symbols of the reference signal is 2, in the m code division multiplexing groups, a maximum quantity of orthogonal ports supported by a code division multiplexing group 0 is 12, and a maximum quantity of orthogonal ports supported by a code division multiplexing group 1 is 4.

15. The apparatus according to claim 14, wherein the reference signal port correspondence comprises one or more of the following correspondences:
when an index is a first value, a reference signal port index corresponding to the index is 0, and a quantity of port symbols corresponding to the reference signal port index is 1;
when the index is a second value, the reference signal port index corresponding to the index is 1, and the quantity of port symbols corresponding to the reference signal port index is 1;
when the index is a third value, the reference signal port index corresponding to the index is 2, and the quantity of port symbols corresponding to the reference signal port index is 1;
when the index is a fourth value, the reference signal port index corresponding to the index is 3, and the quantity of port symbols corresponding to the reference signal port index is 1;
when the index is a fifth value, the reference signal port index corresponding to the index is 8, and the quantity of port symbols corresponding to the reference signal port index is 1;
when the index is a sixth value, the reference signal port index corresponding to the index is 9, and the quantity of port symbols corresponding to the reference signal port index is 1;
when the index is a seventh value, the reference signal port index corresponding to the index is 10, and the quantity of port symbols corresponding to the reference signal port index is 1;
when the index is an eighth value, the reference signal port index corresponding to the index is 11, and the quantity of port symbols corresponding to the reference signal port index is 1;
when the index is a ninth value, the reference signal port index corresponding to the index is one or more of the following: 0 or 1, and the quantity of port symbols corresponding to the reference signal port index is 1;
when the index is a tenth value, the reference signal port index corresponding to the index is one or more of the following: 2 or 3, and the quantity of port symbols corresponding to the reference signal port index is 1;
when the index is an eleventh value, the reference signal port index corresponding to the index is one or more of the following: 8 or 9, and the quantity of port symbols corresponding to the reference signal port index is 1;
when the index is a twelfth value, the reference signal port index corresponding to the index is one or more of the following: 10 or 11, and the quantity of port symbols corresponding to the reference signal port index is 1;
when the index is a thirteenth value, the reference signal port index corresponding to the index is one or more of the following: 0, 1, or 8, and the quantity of port symbols corresponding to the reference signal port index is 1;
when the index is a fourteenth value, the reference signal port index corresponding to the index is one or more of the following: 9, 10, or 11, and the quantity of port symbols corresponding to the reference signal port index is 1;
when the index is a fifteenth value, the reference signal port index corresponding to the index is one or more of the following: 0, 1, 8, or 9, and the quantity of port symbols corresponding to the reference signal port index is 1;
when the index is a sixteenth value, the reference signal port index corresponding to the index is 0, and the quantity of port symbols corresponding to the reference signal port index is 2;
when the index is a seventeenth value, the reference signal port index corresponding to the index is 1, and the quantity of port symbols corresponding to the reference signal port index is 2;
when the index is an eighteenth value, the reference signal port index corresponding to the index is 2, and the quantity of port symbols corresponding to the reference signal port index is 2;
when the index is a nineteenth value, the reference signal port index corresponding to the index is 3, and the quantity of port symbols corresponding to the reference signal port index is 2;
when the index is a twentieth value, the reference signal port index corresponding to the index is 4, and the quantity of port symbols corresponding to the reference signal port index is 2;
when the index is a twenty-first value, the reference signal port index corresponding to the index is 5, and the quantity of port symbols corresponding to the reference signal port index is 2;
when the index is a twenty-second value, the reference signal port index corresponding to the index is 6, and the quantity of port symbols corresponding to the reference signal port index is 2;
when the index is a twenty-third value, the reference signal port index corresponding to the index is 7, and the quantity of port symbols corresponding to the reference signal port index is 2;
when the index is a twenty-fourth value, the reference signal port index corresponding to the index is 8, and the quantity of port symbols corresponding to the reference signal port index is 2;
when the index is a twenty-fifth value, the reference signal port index corresponding to the index is 9, and the quantity of port symbols corresponding to the reference signal port index is 2;
when the index is a twenty-sixth value, the reference signal port index corresponding to the index is 10, and the quantity of port symbols corresponding to the reference signal port index is 2;
when the index is a twenty-seventh value, the reference signal port index corresponding to the index is 11, and the quantity of port symbols corresponding to the reference signal port index is 2;
when the index is a twenty-eighth value, the reference signal port index corresponding to the index is 12, and the quantity of port symbols corresponding to the reference signal port index is 2;
when the index is a twenty-ninth value, the reference signal port index corresponding to the index is 13, and the quantity of port symbols corresponding to the reference signal port index is 2;
when the index is a thirtieth value, the reference signal port index corresponding to the index is 14, and the quantity of port symbols corresponding to the reference signal port index is 2;
when the index is a thirty-first value, the reference signal port index corresponding to the index is 15, and the quantity of port symbols corresponding to the reference signal port index is 2;
when the index is a thirty-second value, the reference signal port index corresponding to the index is 0 or 1, and the quantity of port symbols corresponding to the reference signal port index is 2;
when the index is a thirty-third value, the reference signal port index corresponding to the index is 2 or 3, and the quantity of port symbols corresponding to the reference signal port index is 2;
when the index is a thirty-fourth value, the reference signal port index corresponding to the index is 4 or 5, and the quantity of port symbols corresponding to the reference signal port index is 2;
when the index is a thirty-fifth value, the reference signal port index corresponding to the index is 6 or 7, and the quantity of port symbols corresponding to the reference signal port index is 2;
when the index is a thirty-sixth value, the reference signal port index corresponding to the index is 8 or 9, and the quantity of port symbols corresponding to the reference signal port index is 2;
when the index is a thirty-seventh value, the reference signal port index corresponding to the index is 10 or 11, and the quantity of port symbols corresponding to the reference signal port index is 2;
when the index is a thirty-eighth value, the reference signal port index corresponding to the index is 12 or 13, and the quantity of port symbols corresponding to the reference signal port index is 2;
when the index is a thirty-ninth value, the reference signal port index corresponding to the index is 14 or 15, and the quantity of port symbols corresponding to the reference signal port index is 2;
when the index is a fortieth value, the reference signal port index corresponding to the index is one or more of the following: 0, 1, or 4, and the quantity of port symbols corresponding to the reference signal port index is 2;
when the index is a forty-first value, the reference signal port index corresponding to the index is one or more of the following: 5, 8, or 9, and the quantity of port symbols corresponding to the reference signal port index is 2;
when the index is a forty-second value, the reference signal port index corresponding to the index is one or more of the following: 10, 11, or 12, and the quantity of port symbols corresponding to the reference signal port index is 2;
when the index is a forty-third value, the reference signal port index corresponding to the index is one or more of the following: 13, 14, or 15, and the quantity of port symbols corresponding to the reference signal port index is 2;
when the index is a forty-fourth value, the reference signal port index corresponding to the index is one or more of the following: 2, 3, or 6, and the quantity of port symbols corresponding to the reference signal port index is 2;
when the index is a forty-fifth value, the reference signal port index corresponding to the index is one or more of the following: 0, 1, 4, or 5, and the quantity of port symbols corresponding to the reference signal port index is 2;
when the index is a forty-sixth value, the reference signal port index corresponding to the index is one or more of the following: 8, 9, 10, or 11, and the quantity of port symbols corresponding to the reference signal port index is 2;
when the index is a forty-seventh value, the reference signal port index corresponding to the index is one or more of the following: 12, 13, 14, or 15, and the quantity of port symbols corresponding to the reference signal port index is 2; or
when the index is a forty-eighth value, the reference signal port index corresponding to the index is one or more of the following: 2, 3, 6, or 7, and the quantity of reference signal port symbols corresponding to the port index is 2.

16. The apparatus according to claim 13 or 15, wherein the reference signal port correspondence further comprises an indication that a quantity of code division multiplexing groups is 2.

17. A communication apparatus, comprising a processor, wherein the processor is coupled to a memory;
the memory is configured to store a computer program or instructions; and
the processor is configured to execute a part or all of the computer program or the instructions in the memory; and when the part of or all of the computer program or the instructions are executed, implement the method according to any one of claims 1 to 8.

18. A communication apparatus, comprising a processor and a memory, wherein
the memory is configured to store a computer program or instructions; and
the processor is configured to execute a part or all of the computer program or the instructions in the memory; and when the part of or all of the computer program or the instructions are executed, implement the method according to any one of claims 1 to 8.

19. A chip system, wherein the chip system comprises a processing circuit, and the processing circuit is coupled to a storage medium; and
the processing circuit is configured to execute a part or all of the computer program or the instructions in the storage medium; and when the part of or all of the computer program or the instructions are executed, implement the method according to any one of claims 1 to 8.

20. A computer-readable storage medium, configured to store a computer program, wherein the computer program comprises instructions for implementing the method according to any one of claims 1 to 8.

21. A computer program product, wherein the computer program product comprises computer program code, and when the computer program code is run on a computer, the computer is enabled to perform the method according to any one of claims 1 to 8.
